# EUROPEAN PATENT SPECIFICATION

(11) **EP 2 992 272 B1**
(45) Date of publication and mention of the grant of the patent: **13.02.2019**
(21) Application number: 14791287.7
(22) Date of filing: 29.04.2014
(51) Int. Cl.: F24F 13/30, F24F 12/00, F25B 39/02, F28F 27/02, F25B 6/00, F28D 9/00, F28D 21/00, F28F 9/00, F24F 11/00

(54) **ENERGY RECOVERY SYSTEM AND METHOD**
SYSTEM UND VERFAHREN ZUR ENERGIERÜCKGEWINNUNG
PROCÉDÉ ET SYSTÈME DE RÉCUPÉRATION D'ÉNERGIE

(30) Priority: 29.04.2013 US 201361854588 P; 01.11.2013 US 201361962154 P; 10.02.2014 US 201461965839 P
(43) Date of publication of application: 09.03.2016
(73) Proprietor: Dewair Corporation, Ottawa ON K2B 5A8 (CA)
(72) Inventor: LANDRY, Gerald, Ottawa, Ontario K2B 5A8 (CA)
(74) Representative: Monzón de la Flor, Luis Miguel
(86) International application number: PCT/CA2014/000385
(87) International publication number: WO 2014/176676

(56) References cited:
- EP-A1- 1 939 542
- EP-A1- 2 244 023
- CN-U- 203 163 347
- JP-A- H09 318 130
- US-A1- 2010 115 987
- US-B2- 7 107 787

## Description

### Field Of The Invention

This invention relates generally to heat recovery or energy recovery apparatus and methods and, more particularly, to a heat recovery or energy recovery system and method utilizing a counter flow heat or energy recovery exchangers in a parallel configuration.

### Background Art

Document EP 1 939 542 A1 discloses the preamble of claims 1 and 7.

Heat recovery ventilator (HRV) and energy recovery (ERV) technology are utilized for fresh air, better climate control, energy savings and vapor recovery. Typically a HRV or ERV is a device built for efficient heat transfer or heat and latent heat (vapor) transfer from one air stream to an adjacent crossing air stream through a medium. These devices are often used in the HVAC industry and for energy recovery between gases and or as a concentrator of certain gases.

Air to air heat exchangers usually constructed of several plate type or membrane surface and are known as counter flow or cross flow. These air to air heat exchangers generally operate on the basic principle of having several air paths which any two of its adjacent air streams sliding past each other on a heat exchange plate surface enables heat transfer or energy transfer to occur through the walls of the heat exchange surface.

Plate type made out of metal, plastic facilitate the transfer of heat such as causing a heat or cooling effect in an adjacent air stream and plate type made out of substrate, wicking, porous material also additionally can transfer latent energy such as causing a dehumidification or humidification process in its adjacent crossing air stream.

In colder climates and winter mode of operation, HRV (heat recovery ventilator) do require a defrost method since in winter mode of operation the heat exchanger surface plate tends to freeze up. The outdoor air coming into the heat exchanger may have a below zero degree C temperature, which tends to freeze up the humidity of the outgoing air, such that frost or ice forms in the outgoing air channels. The frost then restricts the air flow and also provides insulation on the heat exchanger face surface, diminishing energy exchange effectiveness.

In most occurrences typical technology utilizes a set of dampers which causes the indoor air in a recirculating defrost mode of operation which performs the ice build up to melt.

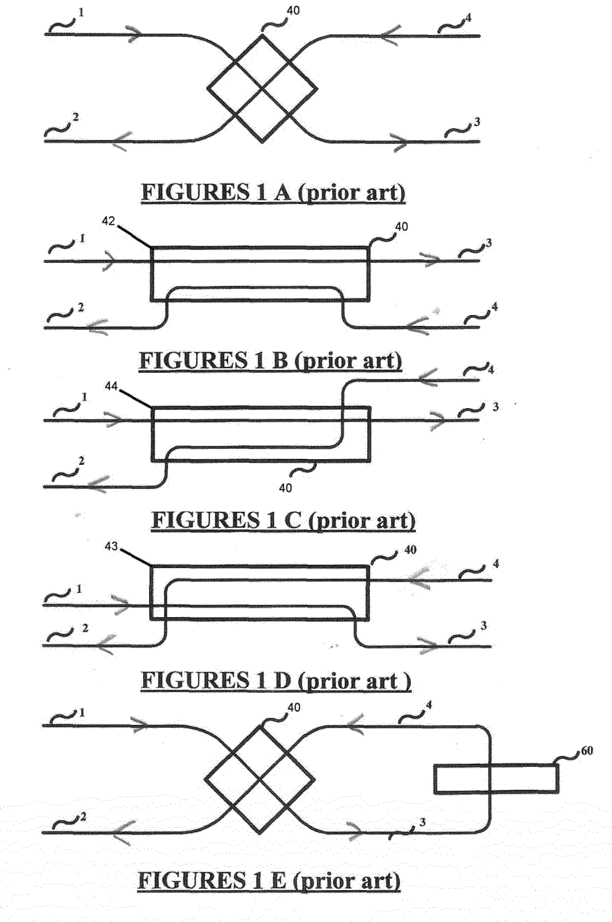

Figures 1A, 1B, 1C, 1D, 1E are prior art. **Now referring to** **Fig 1A**, as shown through Fig 1A, is an entering air stream (1), passing through a cross flow heat/energy exchanger 40. In the heat/energy exchanger the air stream (1) changes to an air stream arrangement of several air streams to flow in a cross flow arrangement crossing the heat/energy exchanger and leaving the heat exchanger as rejoined air stream (3). The passing air transfers its heat/energy through the heat/energy exchanger plate's surfaces to its adjacent air streams. This is achieved through an arrangement as such as any two of its adjacent air streams sliding past each other on a heat exchange plate surface enables heat transfer or energy transfer to occur through the walls of the heat exchange plates surfaces.

The adjacent air flow (4) also crosses in a cross flow arrangement through the opposite direction, as an air stream arrangement of several air streams through the heat exchanger (40) passing through and leaving as air stream (2).

This heat energy transfer can be a cooling process in one set of the air streams and result in a heating process of the adjacent air streams or vice versa depending on the condition of the entering air.

This exchange energy depending on the fin plate type and could additionally be a humidification process in one set of the air streams and result in a dehumidification process of the adjacent air streams or vice versa depending on the condition of the entering air
**Figure 1B** in similarity to Figure 1A but the air streams crosses a counter flow heat/energy exchanger type (40) which the air path (2), (4) showing in a U shape configuration.
**Figure 1C** in similarity to Figure 1A but the air streams crosses a counter flow heat/energy exchanger type (40) which the air path (2), (4) is showing in a Z shape configuration.
**Figure 1D** in similarity to Figure 1A but the air streams crosses a counter flow heat/energy exchanger type (40) which the air path (2), (4) is showing in a L shape configuration.

The control of humidity in indoor environments plays a very important role in providing indoor air quality. Reducing the volume of moisture indoors can reduce the growth of microbiological organisms such as mold, mildew and bacteria, which require moisture to thrive. Airborne contaminants are also often carried with the moisture in the supplied air streams. Most conventional air conditioning processes and systems do not effectively control humidity, nor provide adequate delivery air conditions, in anticipation of the various changes and demands of the indoor or outdoor environments. Although conventional systems provide dehumidification, it is an uncontrolled byproduct of its evaporator coil cooling process, and results in the inadequate control of humidity, and excessive energy consumption, and can also result in building and or space content damage.

As shown in Figure 1E, Air to air heat exchangers can be co joined to a refrigeration system to perform as dehumidifiers.

**FIG. 1E** is a line diagram view showing a prior art air to air heat exchanger in an cross flow air process arrangement similar to fig 1A but adding a cooling a dehumidification coil. In the scenario that the material of the fins is designed to allow heat transfer, meaning thermal energy only, then condensation could occur depending on temperatures and dew points of the air streams.

As shown similar to Fig 1A, the intake air (1) which is to be dehumidified is hot humid air, elevated both in heat and vapor pressure passing through a cross flow type heat exchanger (50). In the heat exchanger the air stream (1) changes to an air stream arrangement of several air streams to flow in a cross flow arrangement crossing the heat exchanger and leaving the as rejoined air stream (3). The passing air streams (1) exchange its heat energy through the heat exchanger plate's surfaces and cause a heating effect to its adjacent air stream (4). This is achieved through an arrangement as such as any two of its adjacent air streams sliding past each other on a heat exchange plate surface enables heat transfer to occur through the walls of the heat exchange surface. The adjacent air flow (4) which is cooler air which leaves the cooling coil (60) also crosses in a cross flow arrangement through the opposite direction, as an air stream arrangement of several air stream through the heat exchanger (50) passing through and leaving as rejoined air stream (2). The air stream (2) is consequently reheated by the hot and humid air stream (1) through the heat exchanger.

This exchange of heat within the heat exchanger can be a cooling process in one set of the air streams and result in a heating process of the adjacent air streams or vice versa depending on the condition of the entering air.

In this scenario through the energy exchange process, the air stream (3) is pre-cooled prior crossing the cooling coil (60) by its adjacent air stream (4) and is pre-conditioned to a lower and augmented vapor pressure condition prior entering the cooling coil (60). If the air stream (3) reaches its dew point, condensation will also occur within the heat exchanger (50). The pre-cooled air stream (3) crosses the cooling coil (60) and is additionally cooled and the dew point is again lowered and vapor is condensed and removed or collected. The cooler air stream (4) leaving the coil (60) reenters the heat exchanger (50).

The dehumidified leaving air (4) will be re-heated in the same energy ratio as the leaving air (3) is cooled by the heat exchanger and process. Thus, the entering air (1) is dehumidified by both the heat exchanger cooling effect and the cooling coil. The process of pre-cooling the air (3) prior entering the cooling coil (6) saves on the amount of energy needed for dehumidification.

It is standard practices to have the heat exchanger units or dehumidifier as standalone, attached to a ducting system or attached as a bypass in the return air duct of a central air distribution system.

This process shown in Figure 1E, outperforms, most conventional dehumidifiers which cool a process air to remove vapor, with a typical refrigeration coil and re-heats the air with condenser energy in the same air stream. In the air cooling process, the conventional finned evaporator coil provides dehumidification only if the saturated vapor conditions are achieved in its crossing air and additional cooling is typically necessary to augment moisture removal.

Typical refrigeration system is often utilized for dehumidification. In these system the refrigerant compression closed cycle of the conventional dehumidifier system, a compressor compresses refrigerant gas to increases its pressure and temperature, in an isentropic adiabatic process. The refrigerant is then passed through a condenser coil where the superheated compressed refrigerant dissipates its heat to the crossing air stream condensing the refrigerant into a high-pressure liquid, which then flows through a metering device or expansion valve that restricts the high-pressure liquid and creates a reverse refrigerant adiabatic effect, after which, the refrigerant is discharged or suctioned to an evaporator coil at lower refrigerant temperature and pressure conditions, which enable the evaporator coil to absorb heat from the crossing air that is forced through the coil by the evaporator fan.

The air exiting the evaporator coil is discharged as cooled and dehumidified air and the refrigerant absorption process changes the refrigerant from liquid-gas to gas, which is then suctioned back to the compressor to complete the closed cycle.

Such system often has the refrigerant condenser coil in the air stream after the evaporator coil as such as the air is re heated but dehumidifies.

Other air conditioning systems optionally utilize a condenser re- heat on demand through the usage of additional refrigerant valves and coil arrangement to force the system to operate and provide dehumidification. In these systems the air must be initially cooled to a dew point and afterward any additional cooling will result both in the removal of vapor by condensation and sensible energy.

The added sensible condenser heat creates a scenario of overcooling. In actual fact, the dehumidification system has the continuous challenge of re cooling the sensible heat which the condenser provided. Actually provides a scenario of repetitive over cooling.

Conventional desiccant rotor technology typically incorporates a rotating desiccant wheel that rotates between two air streams to provide dehumidification or humidification by alternating the energy in a gas phase change process. In such systems, the process air delivered to the interior of a space to be conditioned crosses the desiccant material, which attracts and holds moisture. As the desiccant wheel rotates, the moist desiccant material enters the regeneration air stream where it is heated to release moisture, which is then vented away. Because humidity is a function of vapor pressure, desiccant materials have the ability to remove or add moisture adiabatically; a reversible thermodynamic process in which the energy exchanges result in substantially constant enthalpy equilibrium. The total desiccant open cycle is somewhat similar to a refrigerant vapor-compression cycle. In a desiccant and air system the heated regeneration air adds energy to the moistened desiccant in a desorption process and releases moisture in the regenerating crossing air stream in an adiabatic cooling process. When the desiccant rotates to the process air stream the pre-conditioned desiccant enables the absorption of water and dehumidifies the crossing process air and adiabatic re-heat is released in the air stream. This completes the desiccant vapor-compression open cycle.

Economizers are also used in conjunctions on air conditions system to provide adequate outdoor air to the indoor premises both in a free cooling mode of operation and minimum fresh air option. The heat exchanger serves as an energy recovery part of the apparatus as such as if the air passes through the heat exchanger the air then recovers energy from the outdoor intake air and the premises exhaust air either in a cooling recovery or a heating recovery depending on season. The economizer bypass damper enables the outdoor air to bypass the heat exchanger on the condition that the outdoor air condition is favorable to provide adequate cooling effect.

It is very common practice that a minimum opening of the bypass damper or a second damper provides a constant minimum outdoor air stream. An exhaust and mixed air damper can also be used with these systems. The exhaust damper, mixed air damper and outdoor air bypass dampers can control the air to be brought in from the outdoor, exhausted to the outdoor and the mixed air delivered to the indoor.

In the scenario that the building pressure gets excessive a pressure relief damper can be added either in the return air or in the building itself.

Heat pipes are also known in the industry and are alternate methods for recovering energy

### SUMMARY OF THE INVENTION

The present invention is a heat exchanger system according to claim 1.

In the embodiments described, any of the first, second, third or fourth air paths follows a L-shape air path, a Z-shape air path, or a U-shape air path through the heat exchangers. The heat exchangers may have a bypass damper for controlling the quantity of air leaving the evaporator bypassing the return stream of the heat exchanger to become part or the total delivery air.

In an embodiment, the heat exchanger has a bypass damper as mentioned in claim 3. The heat exchanger may have dampers mounted perpendicularly as mentioned in claim 6.

Furthermore, the present invention is also a method of changing a temperature of air according to claim 7.

While the invention has been disclosed in various preferred forms, the specific embodiments thereof as disclosed and illustrated herein are considered as illustrative only of the principles of the invention and are not to be considered in a limiting sense in interpreting the claims. Thus, it shall be understood that while this invention has been described with respect to various specific examples and embodiments, the invention is not limited thereto and that it can be variously practiced within the scope of the following claims.

Thus, it shall be understood that while this invention has been described as a detail in one of the drawing that it can be utilized as the same detail in all other drawing.

### BRIEF DESCRIPTION OF THE DRAWINGS

FIG. 1A (prior art) is a line diagram view showing a air to air heat/energy exchanger in an air cross flow process and arrangement.
FIG. 1B (prior art) in similarity to Figure 1A but the air streams crosses a counter flow heat/energy exchanger type (40) which the air path (2), (4) showing in a U shape configuration.
FIG. 1C (prior art) in similarity to Figure 1A but the air streams crosses a counter flow heat/energy exchanger type (40) which the air path (2), (4) is showing in a Z shape configuration.
FIG. 1D (prior art) in similarity to Figure 1A but the air streams crosses a counter flow heat/energy exchanger type (40) which the air path (2), (4) is showing in a L shape configuration.
FIG. 1E (prior art) is a line diagram view showing a prior art air to air heat exchanger in an cross flow air process arrangement similar to fig 1A but adding a cooling a dehumidification coil.
FIGS. 2A, 2B and 2C, are three views of a single counter flow U type heat/energy exchanger.
FIGS 2D, 2E, and 2F are three view of a dual U type heat/energy exchanger.
FIG 3A is a diagrammatic view illustrating a general process having two counter flow heat/energy exchanger in parallel in a U shape configuration.
FIG 3B is a diagrammatic view illustrating a general process having two counter flow heat/energy exchangers in parallel in a Z shape configuration.
FIG 3C is a diagrammatic view illustrating a general process having two counter flow heat/energy exchangers in parallel in an L shape configuration.
FIG. 4A is a diagrammatic view illustrating the operation of a dehumidifier using heat exchangers in a U configuration. This illustrates an embodiment of the invention.
FIG. 4B is a diagrammatic view illustrating the operation of a dehumidifier, using heat exchangers set up as an L shape configuration This illustrates an embodiment of the invention.
FIG. 4C is a diagrammatic view illustrating the operation of the dehumidifier, using heat exchangers set up as a L shape configuration, combined with a bypass damper; This illustrates an embodiment of the invention.
FIG. 5 is a diagrammatic view illustrating the cooling coil air flow arrangement.
FIG. 6 is an exploded perspective view of the heat recovery apparatus in an embodiment of the invention.
FIG. 7 is an exploded perspective view of dehumidifier, using heat exchangers.
FIG. 8A is an exploded view of two fan arrangements.
FIG. 8B is an exploded view of a fan arrangement.
FIG. 8C is an exploded view of a fan arrangement.
FIG. 9A is a perspective view of a heat exchanger, according to one embodiment of the present invention.
FIG. 9B is a perspective view of a heat exchanger, according to one embodiment of the present invention.
FIG. 9C is a perspective view of a heat exchanger, according to one embodiment of the present invention.
FIG. 10 is a perspective view of a heat/energy recovery unit, having a defrosting means.
FIG. 11 is an air path diagram in an economizer application.

### DETAILED DESCRIPTION

Detailed descriptions of several preferred embodiments of the energy recovery apparatus and method are provided herein having arrangements of components and operating methods for carrying out various processes. It is to be understood, however, that the present invention may be embodied in various forms and combinations. Therefore, specific details disclosed herein are not to be interpreted as limiting, but rather as a basis for the claims and as a representative basis for teaching one skilled in the art to employ the present invention in any appropriately detailed system, process, structure or manner.

As used herein, the directional terms "left" and "right" refer to the direction or location of the components as they are shown in the drawings, to assist in orienting the reader. However, it is understood that the invention may be oriented in other ways without deviating from the scope of the disclosure.

As used herein, use of the words plate, membrane or fins may be made in reference to the heat exchanger plate surface which could be made of, metal, plastics or an impermeable material, a permeable material, or a porous wicking material. The fins may also be shaped to augment surface area to improve conductivity and or contact with a crossing air stream on both sides of the fins. The surface may be corrugated, a knitted pattern, or a gradient pattern to facilitate contact with the air streams and enable energy, to transfer between adjacent air streams. It also could allow vapor to traverse through means of porous leakage.

As used herein, the terms heat transfer as fin made out of material capable of thermal heat transfer.

As used herein, heat /energy are a type of heat transfer that is also able to transfer thermal heat only, same as heat transfer but additionally could be the type of heat exchanger that could transfer both sensible and latent heat. Since both temperature and moisture is transferred.

As used herein, the term cooling coil as a device capable of providing cooling such as a refrigerant or water type cooling coil or any apparatus capable of providing cooling known in the art.

The term cooling is used to refer to a process which lowers the temperature but also if addition cooling effect is caused below dew point than cooling can additionally be referred also as dehumidifying or condensation.

I used herein the term dehumidification or dehumidifier but do not limit the term to that specific process. The concept can also be used in reference to being a unit capable of collecting water, drying air, a unit which can also be used in conjunction which other apparatus in a closed loop such as to a clothes dryer a kiln or a unit capable drying the air intake of a rotor regeneration air stream.

The airflow direction through the heat exchangers described herein may be in either direction and is reversible; any number of parallel of heat/energy exchanger may be used generally even though the preferred embodiment uses two parallel heat exchangers. Also heat exchangers operate both vertically and horizontally, as gravity has a negligible effect on the air flowing through the heat exchangers.

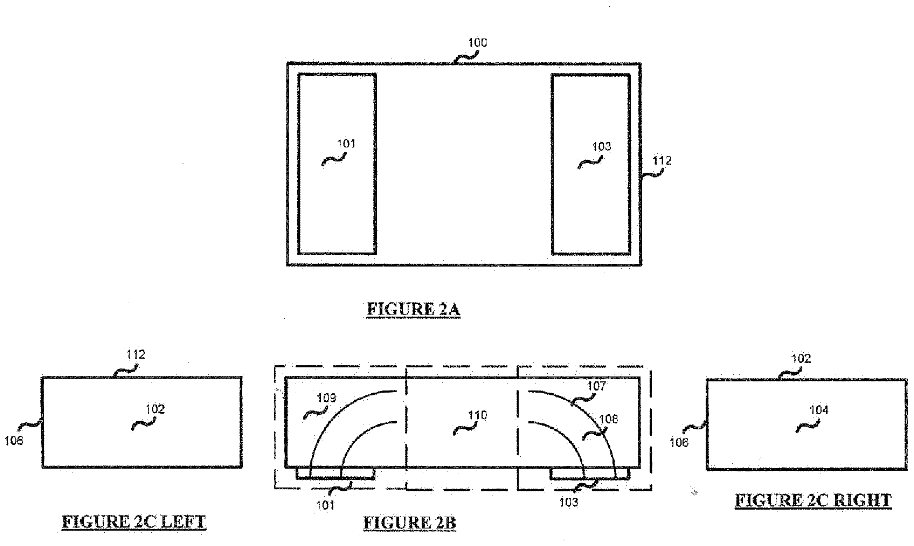

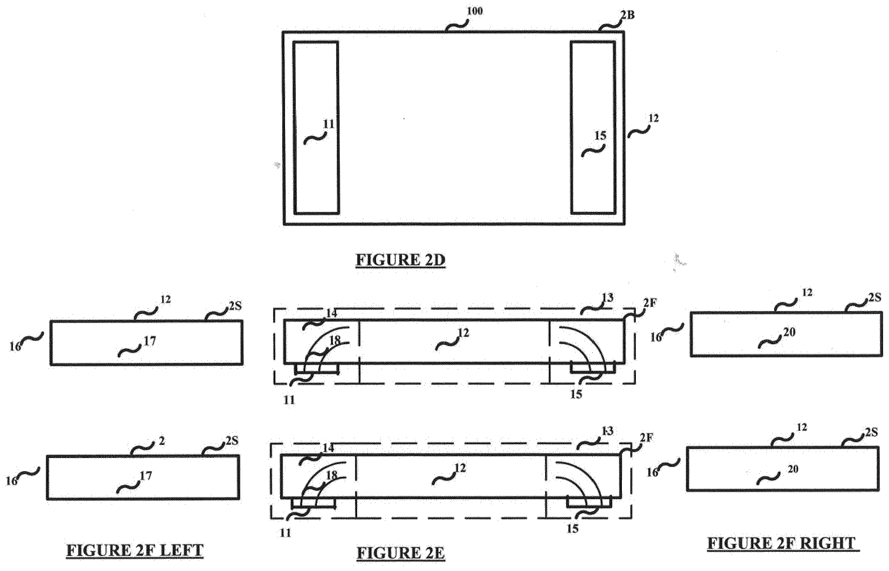

**Now referring to** **Figs.2A, 2B, 2C****,** representing a series of views of a single counter flow U type heat exchanger, showing the heat/energy exchanger effect as compared to a split U type heat exchanger scenario shown in Figures 2D, 2E, 2F maintaining the same volume maintaining the same air and fin type conditions throughout all figure. This heat/energy exchanger can have an air path of an L, Z or U type, representing the air path shape. In this example a U type configuration is used. The view of Fig. 2A is the bottom view, Fig. 2B is the front view and Fig. 2C is the right and left side's view of the heat/energy exchanger device. In the figures, as shown the physical details, length (100), width (112) and height (106). In Figures 2A and 2B the air inlet (101) is on a first left side of the bottom, and the air outlet (103) on a second side.

The right side view, shown in Fig. 2C right, showing the cross sectional area which is indicative of size of the inlet air opening. The left side view, shown in Fig. 2C left, showing the cross sectional area which is indicative of size of the outlet air opening.

The flow is reversible as such as the air opening (101) and (104) become the air outlet if the outlet air streams (102) and (103) are modified to be the air inlets.

In Fig. 2B, air flow (107) is demonstrative of the air stream pattern that the air flowing in through the outlet air stream (103) or flowing out through the air inlet (104) would follow. The adjacent air which is not shown flows straight from the air inlet opening (104) to the outlet (102). The cross flow areas (108) and (109) are the fins surface area of the heat/energy exchanger on the outlet air stream (103) and air inlet (104) where the air has a cross flow heat/energy transfer effect with respect to its air path and adjacent air stream. The counter flow area (110) within the boxed dashed line is the area in which the air has a counter flow heat/energy transfer effect with respect to its air path and adjacent air stream.

**Now referring to** **Figures 2D, 2E and 2F****,** these figures represent a series of views of a two counter flow U shape heat/energy exchangers, showing the heat/energy exchangers effect as compared to a single U shape heat/energy exchanger scenario as shown in Figures 2A, 2B, and 2C. The split heat/energy exchangers having the same combined heat/energy exchanger's volume as compared to the single heat/energy exchanger shown in Figures 2A, 2B and 2C. In this scenario we will maintain the same U type heat /energy exchanger configuration. These heat/energy exchangers can be modified to be either an L, Z or U type. In the figures, as shown the physical details, length (200), width (212) and height (216). In Figures 2D and 2E the air inlet (211) is on a first left side of the bottom, and the air outlet (215) on a second side of each heat/energy exchanger.

The right side view, shown in Fig. 2F right, showing the two cross sectional area (220) of each heat exchanger which is indicative of size of the inlet air openings. The left side view, shown in Fig. 2F left, showing the cross sectional area (217) which is indicative of size of the outlet air openings of each heat exchangers.

In each heat/energy exchanger the adjacent air stream is entering the opening (220) from the right side, which is egress to the left side opening (217).

The flow is reversible as such as the air opening (211) and (220) becomes the air outlet if the air openings (215) and (217) are modified to be the air inlet.

In Fig. 2F left and right side views showing both heat/energy exchangers' height (216) and both sides opening (217) (220). Air enters through the air inlet (211) on a first side of the bottom, and egresses through the air outlet (215) on a second side of the bottom of each unit. The left side view in Fig. 2F showing the side (217) is representative of the area of the cross-section of the air path. The right side view in Fig. 2F showing the side (220) is representative of the area of the cross-section of the air path.

In each heat/energy exchanger the adjacent air streams is entering the openings (220) from the right side, which is egress to the left side openings (217).

In Fig. 2E, in each heat/energy exchangers the air flow (218) is demonstrative of the air stream patterns that the air flowing in through the air inlets (211) or flowing out through the air outlets (215) would follow. The combined cross flow areas (214) and (213) are the fins surface areas of the heat/energy exchanger on the air inlets (211) and air outlets (215) where the air has a cross flow heat/energy transfer effect with respect to its air path and adjacent air stream. The counter flow area of each heat/energy exchanger (212) within the boxed dashed line is the combined area in which the air has a counter flow heat/energy transfer effect with respect to its air path and adjacent air stream.

In figure 2D, 2E and 2F showing the parallel example of the same type of heat/energy exchanger and same fin and air conditions as in the single example Figure 2A, 2B, 2C showing also the length and width as being constant throughout all the drawings. The split heat/energy exchanger has the same volume as compared to the single units also having the same general air flow pattern.

The height (106) from the single example is double that of the parallel example for the same air flow throughout. The combined height of the parallel example in Figure 2F maintains equal to that of the height of the single example in Figure 2C. The air inlet and outlet (101) and (103) opening area of the single example is double the opening area of the air inlet and outlet (211) and (215) of the parallel example, however having a pair of heat/energy exchangers and thus doubling the air flow area then adds up to the same area as shown in Fig 2A.

The sides (102) (104) areas of the single example is equal to the total combined sides (217) (220) areas of the parallel example heat/energy exchangers areas.

In the single example, the cross-flow area (109) and (110) is significantly greater than double the cross-flow areas (213) and (214) of the parallel example showing in both heat/energy exchangers in the front view shown in Fig 2E. As is also apparent, the counter flow area (10) of the single example is much less than the doubled counter flow areas (212) of the parallel example. The areas of the parallel example are doubled as two units are required in parallel to equal the throughput of the single example.

Therefore, in the parallel example, relatively less time is spent by the air passing through the cross-flow areas and relatively greater time is spent in the counter-flow areas, relative to the single example of Figs. 2A, 2B and 2C.

Therefore, in the parallel embodiment, relatively less plate surface area which enables heat/energy transfer is utilized by the air passing through the cross-flow areas and relatively greater plate surface which facilitates heat/energy transfer is used in the counter-flow areas, relative to the single embodiment of Figs. 2A, 2B and 2C.

The cross flow heat/energy transfer effects occurring in the area (109) and (108) of Fig 2B are significantly more than the cross flow heat/energy transfer effect of the combined area (213) and (214) of Figure 2E.

The cross flow is the less effective heat/energy transfer process as compared to the counter flow. Showing through this comparison between the dual set of heat/energy exchanger scenario is a significant reduction in cross flow effect as compared to a single heat/energy exchanger. The cross flow occurring at each end of the heat/energy exchangers causes the total cross flow heat/energy transfer to be a limiting denominator in energy exchange. In comparison form Fig. 2D, 2E, 2F as compared to Fig. 2A, 2B, 23C having a set of heat/energy exchanger au lieu of a single unit diminishes the cross flow effect.

The counter flow heat/energy transfer effects occurring in the area (110) of Fig 2B are significantly less than the counter flow heat/energy transfer effect of the combined area (212) Figure 2E.

The counter flow is the most effective heat/energy exchange process as compared to the cross flow. Showing through this comparison between the dual set of heat/energy exchanger scenario is a significant increase in counter flow heat transfer effect. The counter flow occurring at the center of the split heat/energy exchanger causes the total counter flow effect to be an augmented numerator in energy exchange as compared to the single heat/energy exchanger shown.

This division of the single configuration into a dual equal length and width array will provide for a higher ratio of the counter flow heat/energy exchanger surface area ratio over the cross flow surface area. Consequently in the parallel example, relatively less time is spent by the air passing through the cross-flow areas and relatively greater time is spent in the counter-flow areas, relative to the single example. Additionally in the parallel example, relatively less heat/energy transfer surface area is utilized by the air passing through the cross-flow areas and relatively greater heat/energy transfer surface area is utilized in the counter-flow areas, relative to the single example.

This offers this design a higher heat/energy transfer coefficient in comparison of the single configuration.

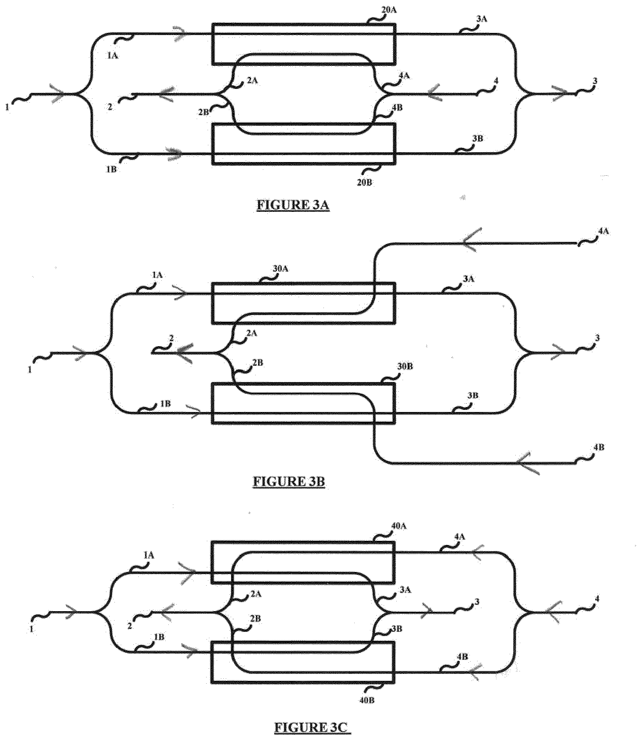

**Referring now to** **Figure 3A,** FIG 3A is a diagrammatic view illustrating a general process having two counter flow heat/energy exchanger in parallel in a U shape configuration.

Air stream 1, represents the intake side of the first air system (such as outside air) heat/energy exchanger, wherein the flow is divided into two or more streams (1A) (1B)... (1X) depending on the number of parallel heat/energy exchangers (20A), (20B).... (20X). Air stream 1A enters the air inlet of heat/energy exchanger 20A, air stream 1B enters the air inlet of heat/energy exchanger 20B, and so on depending on the number of heat/energy exchangers. Air stream 3 represents the outlet side (such as indoor delivery air) of the first air system of heat/energy exchanger 20, such that air stream (3A) egresses from 20A, air stream (3B) egresses from heat/energy exchanger 20B, and so on.

The intake air stream (1) combined with the outlet air stream (3) forms an air pattern of a U shape heat exchanger configuration.

Air stream 2 represents the intake side of the second air system (such as inside air) heat/energy exchanger, wherein the flow is divided into two or more streams (2A) (2B)... (2X) depending on the number of parallel heat/energy exchangers (20A), (20B).... (20X). Air stream 4 represents the outlet side of the second air system (such as the exhaust air) of heat/energy exchanger 20, such that air stream (4A) egresses from exchanger 20A, air stream (4B) egresses from heat/energy exchanger 20B, and so on.

In the example of Figure 3A, the air of the first system and second system are kept separate. Furthermore, a single inlet stream 1 or 2 is divided depending on the number of heat/energy exchangers, and then the separate outlet air streams (3A) and (3B), or (2A) and (2B), are combined to form single outlet air stream 3 or 4.

**Referring now to** **Figure 3B,** FIG 3B is a diagrammatic view illustrating a general process having two counter flow heat/energy exchanger in parallel in a Z shape configuration.

Air stream 1 represents the intake side of the first air system (such as outside air) heat/energy exchanger, wherein the flow is divided into two or more streams (1A) (1B)... (1X), depending on the number of parallel heat/energy exchangers (30A), (30B).... (30X). Air stream 1A enters the air inlet of heat/energy exchanger 30A, air stream 1B enters the air inlet of heat exchanger 30B, and so on depending on the number of heat/energy exchangers.. Air stream 3 represents the outlet side of the first air system (such as the indoor delivery air) of heat/energy exchanger 30, such that air stream (3A) egresses from 30A, air stream (3B) egresses from heat/energy exchanger 30B, and so on.

The intake air stream (1), combined with the outlet (3) forms an air pattern of a Z shape heat exchanger configuration.

Air stream 2 (such as inside air) represents the intake side of the second air system of the heat/energy exchanger, wherein the flow is divided into two or more streams (2A) (2B)... (2X) depending on the number of parallel heat/energy exchangers (30A), (30B).... (30X). Air stream 4 represents the outlet side of the second air (such as the exhaust air) system of heat/energy exchanger 30, such that air stream (4A) egresses from 30A, air stream (4B) egresses from heat/energy exchanger 30B, and so on.

In the example of Figure 3B, the air of the first system and second system are kept separate. Furthermore, a single inlet stream 1 or 2 is divided depending on the number of heat/energy exchangers, and then the separate outlet air streams (3A) and (3B), or (2A) and (2B), are combined to form single outlet air stream 3. In this example single outlet stream 4 remains separate.

**Referring now to** **Figure 3C,** FIG 3C is a diagrammatic view illustrating a general process having two counter flow heat exchanger in parallel in an L shape configuration.

Air stream 1 represents the intake side of the first air system (such as outside air) heat/energy exchanger, wherein the flow is divided into two or more streams (1A) (1B)... (1X) depending on the number of parallel heat/energy exchangers (40A), (40B).... (40X). Air stream 1A enters the air inlet of heat/energy exchanger 40A, air stream 1B enters the air inlet of heat/energy exchanger 40B, and so on depending on the number of heat/energy exchangers.. Air stream 3 which could represents the outlet side of the first air (such as the indoor delivery air) system of heat/energy exchanger 40, such that air stream (3A) egresses from 40A, air stream (3B) egresses from heat/energy exchanger 40B, and so on.

The intake air stream (1 combined with the outlet (3) forms an air pattern of a L shape heat exchanger configuration.

Air stream 2 represents the intake side of the second air system (such as inside air) heat exchanger, wherein the flow is divided into two or more streams (2A) (2B)... (2X) depending on the number of parallel heat exchangers (40A), (40B).... (40X). Air stream 4 represents the outlet side of the second air system (such as the exhaust air) of heat/energy exchanger 40, such that air stream (4A) egresses from 40A, air stream (4B) egresses from heat/energy exchanger 40B, and so on.

In the example of Figure 3A, the air of the first system and second system are kept separate. Furthermore, a single inlet stream 1 or 2 is divided depending on the number of heat/energy exchangers, and then the separate outlet air streams (3A) and (3B), or (2A) and (2B), are combined to form single outlet air stream 3 or 4.

**Still referring to** **Figures 3A, 3B and 3C** two exchangers are shown in parallel, in a U, Z or L shapes heat/energy exchanger's process. Other types of heat/energy exchangers not shown which are standard in the industry such as double U or double L can also be utilized.

In these drawing are showing the air stream attachment in a simplified as describe in all drawings. Since the heat/energy exchangers type is not limiting, we will refer to it as heat/energy exchangers and will be representative of (40). For ease of reference, reference 42 represents the U-shape configuration, 44 the Z-shape and 43 the L-shape.

Intake air stream (1) (such as the outdoor air) is in fluid communication via air stream (1A) (1B)... (1X), to each intake left side and opening of the heat/energy exchangers. As shown through all Figs 3, the air stream (1A) (1B)... (1X) entering the air heat exchangers changes as an air stream arrangement of several air streams to flow in a counter flow arrangement crossing the heat/energy exchangers and leaving the as air stream (3A) (3B) (3X) which rejoins as a single air stream (3) (such as the indoor delivery air).

This adjacent air stream (2) (usually the indoor air) is in fluid communication via air stream (2A) (2B)... (2X), to each right intake side and opening of the heat/energy exchangers.

The adjacent air flow (2A), (2B)... (2X) in each heat/energy exchangers also crosses in a counter flow arrangement through the opposite direction, as an air stream arrangement of several air streams through the heat exchangers passing through and leaving as air stream (4A), (4B) (4X) in each heat/energy exchangers. These air streams are rejoined as a single delivery air stream (4) (such as the exhaust air)

Within each heat/energy exchangers, the several passing air streams coming from (1A) (1B) (1X) within the heat/energy exchangers, transfers its heat/energy through its plate's surfaces to its adjacent crossing air stream (4A) (4B) (4X). Working in an arrangement as such as any two of its adjacent air streams sliding past each other on a heat exchangers plates surfaces enables heat transfer or energy transfer to occur through the walls of the heat exchangers.

This exchange of heat/energy between the several air streams (1), which is adjacent to the several air streams (4) within the heat/energy exchangers can be a cooling process in one set of the air streams and result in a heating process of the adjacent air streams or vice versa depending on the condition of the entering air.

In the condition that the plate type enables energy transfer then the exchange of energy transfer between the several air streams (1), which is adjacent to the several air streams (2) within the heat/energy exchangers can additionally be also a dehumidification process in one set of the air streams and result in a humidification process of the adjacent air streams or vice versa depending on the condition of the entering air.

The leaving air streams (3) and (4) are consequently either re heated or cooled depending on circumstances and discharged to an appropriate location or conduit. On the conditions of the plate type enables energy transfer, the leaving air streams (3) and (4) could additionally be either dehumidified or humidified depending on circumstances and discharged to an appropriate location or conduit.
As demonstrated in Figures 2 it is apparent through physical observation that having two heat exchangers units instead of one maximizes benefit of the counter flow effect.

This offers this design a higher heat/energy transfer coefficient in comparison of the single configuration.

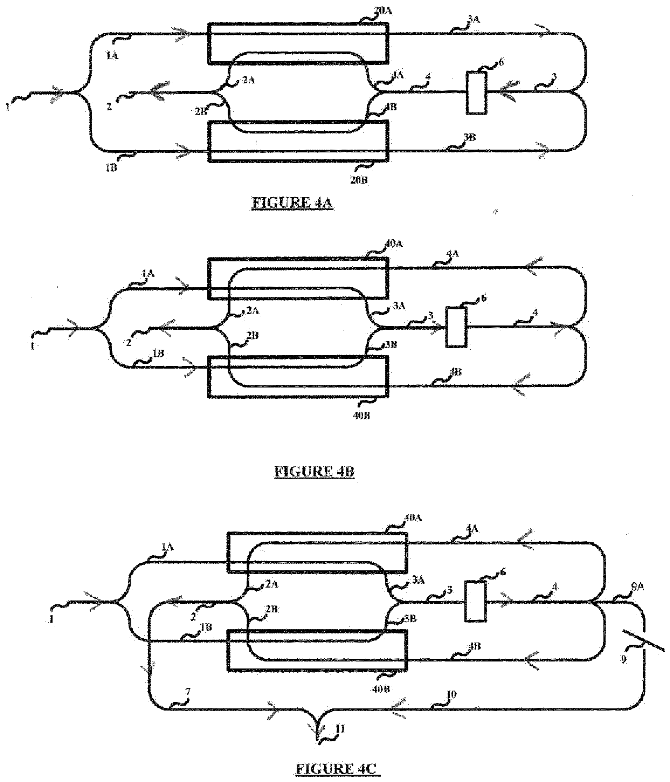

**Referring now to** **Fig 4** **A,** FIG. 4A is a diagrammatic view illustrating the operation of the dehumidifier, showing the airflow paths for routing the air into a first set heat exchangers set up as a U configuration, crossing an evaporator coil, and recirculation through a second exchangers side. In these embodiments, a single air stream 1 enters the system and a single, dehumidified air stream 2 leaves the system. Heat exchanger 20 meaning a heat exchanger shape into a U shape (42) configuration in similarity as in figure 3A.

Air stream 1 represents the intake side of the first air system (the air to be dehumidified) heat exchanger, wherein the flow is divided into two or more streams (1A), (1B)... (1X) according to the number of parallel heat/energy exchangers (20A), (20B).... (20X). Air stream 1A enters the air inlet of heat exchanger 20A, air stream 1B enters the air inlet of heat exchanger 20B, and so on depending on the number of heat/energy exchangers. Air stream 3 represents the outlet side of the first air system of heat/energy exchanger 20, such that air stream (3A) egresses from 20A, air stream (3B) egresses from heat/energy exchanger 20B, and so on. In an embodiment, the air streams 3A, 3B may be combined before passing through the cooling coil (6).

The heat exchangers 20 outlet air stream (3) passes by and is in fluid communication with the cooling coil (6). Once the air passes the cooling coil (6) it is part of the second intake air stream (4), which is now cooled by the coil (6). The air is dehumidified as cooler air carries less moisture, and wherein the excess moisture condenses to the coil and is evacuated from the system.

Air stream 4 represents the intake side of the second air system, the air cooled by the coil passing into the heat/energy exchanger, wherein the flow is again divided into two or more streams (4A) (4B)... (4X) depending on the number of parallel heat/energy exchangers (20A), (20B).... (20X). Air stream 2 represents the outlet side of the second air system (such as the dehumidified delivery air) of heat/energy exchanger 20, such that air stream (2A) egresses from 20A, air stream (2B) egresses from heat/energy exchanger 20B, and so on. The outlet streams 2A, 2B are combined in an embodiment to provide a single output of dehumidified air.

With reference to Figures 4A - C, in embodiments where the evaporator is of a refrigerant-type, its condenser coil can be installed within the unit's delivery air (2), or in adjacent or exterior air (not shown). In an embodiment where the evaporator is a refrigerant type, and is combined with two condensers, one of the condensers may be installed in the delivery air (2) and the second may be installed in adjacent or exterior air (not shown). Condensers may be located within air or fluid (such as water) in order to perform its function.

**Referring now to** **Fig 4** **B,** FIG. 4B is a diagrammatic view illustrating the operation of the dehumidifier, showing the airflow paths for routing the air into a first set of heat exchangers arranged in an L-shape configuration, crossing an evaporator coil, and recirculation through a second exchangers side.

Heat exchanger 40 meaning a heat exchanger which is shaped into an L shape configuration in similarities as in Figure 3C.

Air stream 1, represents the intake side of the first air system (the air to be dehumidified) heat exchanger, wherein the flow is divided into two or more streams (1A), (1B)... (1X) depending on the number of parallel heat/energy exchangers (40A), (40B).... (40X). Air stream 1A enters the air inlet of heat exchanger 40A, air stream 1B enters the air inlet of heat exchanger 40B, and so on depending on the number of heat/energy exchangers. Air stream 3 represents the outlet side of the first air system of heat/energy exchanger 40, such that air stream (3A) egresses from 40A, air stream (3B) egresses from heat/energy exchanger 40B, and so on.

The heat exchangers 40 outlet air stream (3) (such as the cooling coil entering air) is in fluid communication to the inlet of the cooling coil (6). On the outlet side of the cooling coil (6) is in fluid communication to the second intake air stream (4), the cooled and dehumidified air leaving the coil.

Air stream 4 represents the intake side of the second air system (air leaving the cooling coil) heat/energy exchanger, wherein the flow is divided into two or more streams (4A) (4B)... (4X) depending on the number of parallel heat/energy exchangers (40A), (40B).... (40X). Air stream 2 represents the outlet side of the second air system (such as the dehumidified delivery air) of heat/energy exchanger 40, such that air stream (2A) egresses from 4A, air stream (2B) egresses from heat/energy exchanger 40B, and so on.

Referring now to Fig 4A and 4B are diagrammatic views illustrating the operation of the dehumidifier ,showing the airflow paths for routing the air into a first set heat exchangers set up as a U or L configuration, crossing an evaporator coil, and recirculation through a second exchangers side.

For ease of reference, 42 representing the U-shape configuration, 43 the L-shape, 44 the Z-shape and the heat exchangers will be referred to as any two heat exchangers of the same configuration.

Air stream (1) is in fluid communication via air stream (1A) (1B)... (1X), to each left side and opening of the heat exchangers. The air stream (1B) (1X) entering in the left side of each heat exchangers changes into the air stream arrangement of several air streams to flow in a counter flow arrangement crossing the heat exchangers and leaving the as air stream (3A) (3B) (3X). In each heat exchanger, the passing air exchanges its heat through the heat exchanger plate's surfaces to its adjacent air stream and causes a heating effect to its adjacent air stream. Working in an arrangement as such as any two of its adjacent air streams sliding past each other on a heat exchange plate surface enables heat transfer to occur through the walls of the heat exchangers surface plates. The cooler air streams (4A) (4B) (4X) passes through its respective U or L shape heat exchangers in a counter flow arrangement through the opposite direction of air steam 1, passing through and leaving as air stream (2A) (2B) (2X) in each heat exchangers. These air streams are rejoined as a single delivery air stream (2).

The air stream (2) is consequently reheated by its hot and humid air stream (1) on its way through the heat exchangers. This exchange of energy is a cooling process in the air stream (3A) (3B) and result in a heating process of the adjacent air streams (2A) (2B). The air stream (4A) (4B) provide the cooling effect in its adjacent air stream (1B) (1X) and in result the leaving air (3A) (3B) (3X), is pre-cooled prior crossing the cooling coil (6) and is pre-conditioned to a lower and augmented vapor pressure condition prior entering the cooling coil (6).

If the air stream (3) reaches its dew point, condensation will also occur within the energy exchangers. The pre-cooled air stream (3) crosses the cooling coil (6) and is additionally cooled and the dew point is again lowered and vapor is condensed and removed or collected. The cooler air stream (4) leaving the coil (6) reenters the heat exchangers, via air path (4A) (4B).

The entering air (1) can be dehumidified and cooled by both the heat exchangers counter flow heat exchange process effect and the cooling coil.

The process resulting in pre-cooling the air (3) prior entering the cooling coil (6) saves on the amount of energy needed for dehumidification.
As demonstrated in Figures 2 it is apparent through physical observation that having two heat exchangers units instead of one maximizes benefit of the counter flow effect.

This offers this design a higher heat/energy transfer coefficient in comparison of the single configuration.

**Referring now to** **FIG. 4C,** FIG. 4C is a diagrammatic view illustrating the operation of the dehumidifier, showing the airflow paths for routing the air into a first set heat exchangers set up as a L shape configuration, crossing an evaporator coil, and recirculation through a second exchangers side , combined with a bypass damper.

Although this Figure is showing an L type heat exchanger configuration the process can also be applied also with a U shape heat exchanger configuration.

Air stream 1, represents the intake side of the first air system (the air to be dehumidified) heat exchanger, wherein the flow is divided into two or more streams (1A) (1B)... (1X) depending on the number of parallel heat/energy exchangers (40A), (40B).... (40X). Air stream 1A enters the air inlet of heat exchanger 40A, air stream 1B enters the air inlet of heat exchanger 40B, and so on depending on the number of heat/energy exchangers.. Air stream 3 represents the outlet side of the first air system of heat/energy exchanger 40, such that air stream (3A) egresses from 40A, air stream (3B) egresses from heat/energy exchanger 40B, and so on.

The heat exchangers 40 outlet air stream (3) (such as the cooling coil entering air) is in fluid communication to the cooling coil (6).On the adjacent side of the cooling coil (6) is in fluid communication to the second intake air stream (4) (also the cooling coil leaving air).

Air stream 4 represents the intake side of the second air system (cooling coil leaving air) heat/energy exchanger, wherein the flow is divided into two or more streams (4A) (4B)... (4X) depending on the number of parallel heat/energy exchangers (40A), (40B).... (40X). Air stream 2 represents the outlet side of the second air system (such as the dehumidified delivery air) of heat/energy exchanger 40, such that air stream (2A) egresses from 20A, air stream (2B) egresses from heat/energy exchanger 40B, and so on.

A second air stream to air stream, the cooling coil entering air (4) is in fluid communication via air path (9A) to bypass damper (9B). The air (10) leaving which flows across bypass damper (9B) then becomes the total delivery air stream (11) via air path (10) and rejoins the heat exchanger output air (2).

Referring now to Fig 4C are diagrammatic views illustrating the operation of the dehumidifier, showing the airflow paths for routing the air into a first set heat exchangers set up as an L configuration, crossing an evaporator coil, and recirculation through a second exchangers side , combined with a bypass damper.

The process remains similar to Figures 4A, 4B but a bypass damper is added enabling a sensible cooling control feature.

Air stream (1) is in fluid communication via air stream (1A), (1B)... (1X), to each left side and opening of the heat exchangers. The air stream (1A) (1B) (1X) entering in the left side of each heat exchangers changes into the air stream arrangement of several air streams to flow in a counter flow arrangement crossing the heat exchangers and leaving the as air stream (3A) (3B) (3X). In each heat exchanger, the passing air transfers its energy through the heat exchanger plate's surfaces to its adjacent air stream and causes a heating effect to its adjacent air stream. Working in an arrangement as such as any two of its adjacent air streams sliding past each other on a heat exchange plate surface enables heat transfer or energy transfer to occur through the walls of the heat exchange surface. The adjacent air flow (4A) (4B) (4X) in each heat exchangers also crosses in a counter flow arrangement through the opposite direction as an air streams arrangement of several air streams through the heat exchangers passing through and leaving as air stream (2A) (2B) (2X) in each heat exchangers. These air streams are rejoined as a single delivery air stream (2).

The air stream (2) is consequently reheated by its hot and humid air stream (1) as it passes through the heat exchanger. This exchange of energy is a cooling process in the air stream (3A) (3B) and result in a heating process of the adjacent air streams (2A) (2B).

The air stream (4A) (4B) provide the cooling effect in its adjacent air stream (1A) (1B) (1X) and in result the leaving air (3A) (3B) (3X), is pre-cooled prior crossing the cooling coil (6) and is pre-conditioned to a lower and augmented vapor pressure condition prior entering the cooling coil (6).

If the air stream (3) reaches its dew point, condensation will also occur within the energy exchanger (40). The pre-cooled air stream (3) crosses the cooling coil (6) and is additionally cooled and the dew point is again lowered and vapor is condensed and removed or collected. The cooler air stream (4) leaving the coil (6) reenters the heat exchangers (40), via air path (4A) (4B).

The entering air (1) can be dehumidified and cooled by both the heat exchangers counter flow heat exchange process effect and the cooling coil. The process resulting in pre-cooling the air (3) prior entering the cooling coil (6) saves on the amount of energy needed for dehumidification.

The controlled bypass damper (9B) controls the quantity of cooler air stream (4) leaving the cooling coil (6) bypassing the heat exchanger (40) which is connected to the cooling coil (6) to discharge as air delivery air stream (11).The non-bypass air same as in figure 4B via air stream (4) then returns across the heat exchangers (40) as air streams (4A) (4B) and then is discharged as dehumidified re heated air stream (2).

As the damper (9B) opens the air streams (4A) (4A) is reduced in quantity. The air stream (4) leaving the cooling coil (6) consequently bypasses through the damper (9B) instead of the heat exchangers and re connects with the diminished dehumidified delivery air (2) as a combined delivery air stream (11). This modulating control enables to control the effect of the cooling coil process. Opening the bypass air damper will increase the sensible cooling effect and diminished the total dehumidification and re heat effect from air stream (2). Closing the damper (9B) will augment the air stream (2) and restrict the air stream (9A). Consequently the delivery air stream (11) will result as hotter and dehumidified.

In an embodiment using a refrigerant-type evaporator, one or more condensers (not shown) dissipates heat in the outlet side of the unit and/or in an adjacent or exterior air stream. Furthermore, the heat exchangers need not exchange heat with air through each path - liquid may be used as one path of the heat exchanger, whereas air used in the other. In an embodiment using two or more condensers there may be a refrigerant valve to select the flow of refrigerant to a preferred condenser, whether in the outlet side of the unit and/or in an adjacent or exterior air stream.

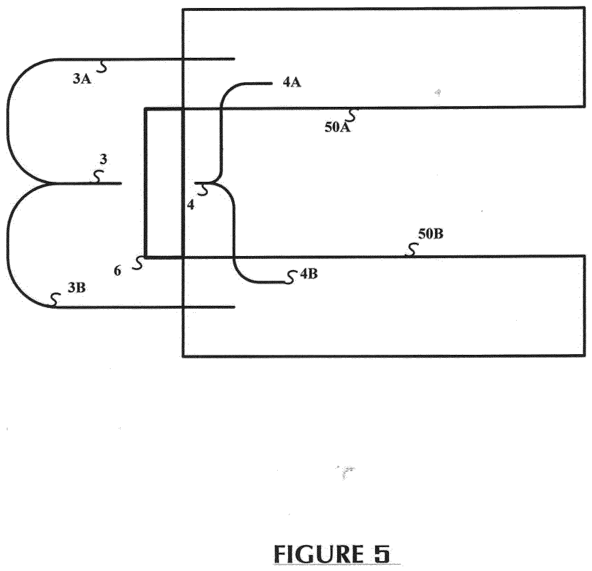

**Now referring to** **FIG. 5,** FIG.5 is a diagrammatic view illustrating the cooling coil air flow arrangement in a detailed embodiment to Figures 4.

The air stream 3 is in fluid communication to the cooling coil (6) which is re connected to the air stream (4). The type of heat exchangers can be configured into either L or, U shape.

As a second air stream to air stream, via air stream (4) air streams (4A) (4B) are also connected to the interior opening of the heat exchangers (50). Air stream (3) is also attached to the left side opening of the heat exchangers (50) via air stream (3A) (3B).

In this method of operation showing the air flow in one of the directions, the airflow leaving at the left side of the heat exchangers via air stream (3A)(3B) rejoins as air stream (3) crosses the cooling coil (6) wherein the cooling coil additionally cools the air. The additionally cooled air stream (4) leaving the cooling coil (6) reenters the inner part of the heat exchangers (50) on the left side via air stream (4A) (4B).

In this method of operation showing the air flow in the second air flow direction that is probable the airflow leaving at the inner part of the heat exchangers via air stream (4A) (4B) rejoins as air stream (4) crosses the cooling coil (6) which the cooling coil additionally cools the air . The additionally cooled air (3) leaving the cooling coil (6) reenters the left part of the heat exchangers (50) on the left side via air stream (3A) (3B).

The cooling coil (6) can be any type of cooling device, can be of a refrigerant evaporator type such as a horizontal, A type coil or water type cooling coil.

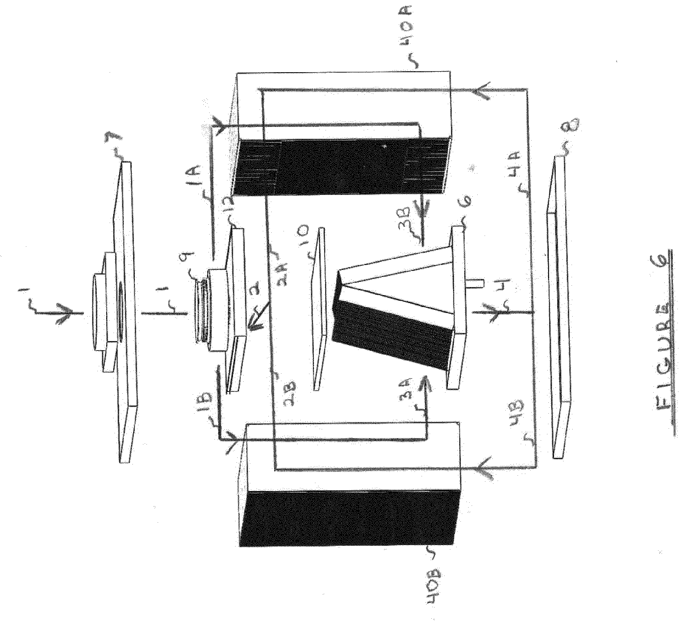

**Now referring to** **FIG.6****,** which shows an exploded perspective view of a modification of the of the energy recovery apparatus, utilized as a dehumidifier apparatus, representing an example of the system described in FIGS. 4A - 4C.

Air stream (1) is in fluid communication via air stream (1B) to each top left and top right side and opening of the heat exchanger (40). Air stream 3 is in fluid communication via air stream (3A) (3B) to each heat exchanger second opening. The air stream (3A) (3B) is in connecting to the exterior side of the cooling coil (6). Air stream (2) is in fluid communication via air stream (2A) (2B) to each center opening of the heat exchanger (40). Air stream (4A), (4B) in fluid communication to the bottom opening of the heat exchangers are also through connected to the bottom opening of the cooling coil (6) via air stream (4).

In the back of the unit, the top right outlet (2) is disposed in fluid communication in the center of the set of counter energy exchangers (40). The inner facing of the heat exchangers combined with the adaptor or fan (9), fan back panel (12) combined with the middle panel (10) including not show the unit casing, are engaged in fluid sealing relation to provide the fluid communication from the air stream (2) to the inner top opening of the set of heat exchanger (40).

The inner facing of the heat exchangers combined the cooling coil (6) draining pan combined with the middle panel (10) including not shown the unit casing, are engaged in fluid sealing relation to provide the fluid communication from the air stream (3A) (3B).

The inner facing of the top cover (7) combined with the inlet ring adaptor and fan (9) and the fan back panel (12) are engaged in fluid sealing relation to provide the fluid communication from the top cover inlet and the fan (9) inlet.

The top cover (7) the unit casing not shown , combined with the two top area of the heat exchangers and the fan (9) the fan back panel (12) are engaged in fluid sealing relation to provide the fluid communication from the fan (9) discharge to the heat exchangers (40) top opening. The fan back panel (12) with the inner facing top cover (7) combined with the unit exterior casing (not shown) also including both left and right opening of the heat exchangers are engaged in fluid sealing communication to define the blower housing. The inner facing of the bottom cover (8) and the cooling coil (6) drain pan are engaged in fluid sealing relation to provide the fluid communication from the bottom opening of the heat exchangers (40) to the cooling coil (6). In the embodiment shown, the heat exchangers are of L type configuration.

First explaining the air paths; Air stream (1) is suctioned by the fan (9), the inner facing of the top cover (7) combined with the inlet ring adaptor and fan (9) and the fan back panel (12) are engaged in fluid sealing relation to provide the fluid communication from the top cover inlet and the fan (9) inlet.

The fan then discharged an air stream (1A), (1B). The top cover (7), the unit casing not shown, combined with the two top area of the heat exchangers and the fan (9), the fan back panel (12)are engaged in fluid sealing relation to provide the fluid communication from the fan (9) discharge to the heat exchangers (40) top opening.

Air stream (1) is in fluid communication via air stream (1B)... (1X), and pressurized by the fan (9) to each top left and right side and opening of the heat exchangers. The air stream (1B)... (1X) entering in the top left and right side of each heat exchangers. The air stream (1B) entering the heat exchangers changes to an air stream arrangement of several air streams to flow in a counter flow arrangement crossing the heat exchangers and leaving the as air stream (3A) (3B)... (3X). In each heat exchanger, the passing air transfers its heat energy through the heat exchanger plate's surfaces to its adjacent air stream and causes a heating effect to its adjacent air streams (4A) (4B)... (4X).

The inner facing of the heat exchangers combined the cooling (6) draining pan combined with the middle panel (10) including not shown the unit casing, are engaged in fluid sealing relation to provide the fluid communication from the air stream (3A) (3B).

This air then crosses across the cooling coil (6) on both sides. The leaving air stream (4) splits in to (4A) (4B) then reenters the bottom opening of the heat exchanger (40). The inner facing of the bottom cover (8) and the cooling coil (6) drain pan are engaged in fluid sealing relation to provide the fluid communication from the bottom opening of the heat exchangers (40) to the cooling coil (6).

The adjacent air flow (4A) (4B)... (4X), in each heat exchangers also crosses in a counter flow arrangement through the opposite direction, also as an air stream arrangement of several air stream through the heat exchangers (40) causing an exchange of energy in its adjacent air stream (3A), (3B).

This exchange of energy is a cooling process in the air stream (3A) (3B) and result in a heating process of the adjacent air streams (2A) (2B) depending on the condition of the entering air. These air streams are rejoined as a single delivery air stream (2).

The inner facing of the heat exchangers combined with the adaptor or fan (9), fan back panel (12) combined with the middle panel (10) including not show the unit casing, are engaged in fluid sealing relation to provide the fluid communication from the air stream (2) to the inner top opening of the set of heat exchanger (40).

The air stream (2) is consequently reheated by its hot and humid air stream (1).

Air stream (1) flow into the unit past adapter or fan (9), and splits to become air stream (1A) and (1B) which enters heat exchangers (40A), (40B) on either side. The fan back panel (12) keeps air streams (1A) and (1B) separate from the air streams (2B) and (2A). Air streams (1A) and (1B) emerge from the heat exchangers (40A), (40B) respectively as air streams (3A) and (3B), which enter the cooling coil (6) and pass the evaporator's fins. The middle panel (10) keeps the air streams (3A) and (3B) separate from the air streams (2A) and (2B). These air streams (3A) and (3B) leave the evaporator as combined air stream (4), which is divided again into air streams (4A) and (4B) to pass through heat exchangers (40A), (40B) respectively. These air streams emerge from heat exchangers (40A) and (40B) as air streams (2A) and (2B), respectively, which are combined into air stream (2) to depart from the unit.

Since the material of the fins is designed to allow heat transfer, then condensation could occur depending on temperatures and dew points of the air streams.

The air stream (4A) (4B) provide the cooling effect in its adjacent air stream (1B) ... (1X) within the heat exchangers 40A, 40B, with the result that the leaving air (3A) (3B)... (3X), is pre-cooled prior to crossing the cooling coil (6) and is pre-conditioned to a lower and augmented vapor pressure condition prior entering the cooling coil (6). If the air stream (3) reaches its dew point, condensation will also occur within the energy exchanger (40). The pre-cooled air stream (3) crosses the cooling coil (6) and is additionally cooled and the dew point is again lowered and vapor is condensed and removed or collected. The cooler air stream (4) leaving the coil (6) reenters the heat exchangers (40), via air path (4A) (4B). Also, in the same heat exchanger process, the dehumidified leaving air stream (4) will be re-heated in the same energy ratio. Thus, the entering air (1) can be dehumidified by both the heat exchangers counter flow heat exchange process effect and the cooling coil. The process of pre-cooling the air (3) prior to entering the cooling coil (6) saves on the amount of energy needed for dehumidification. The pre-cooled air (3) also reduces the cooling capacity usually needed to provide for an effective dew point in the leaving air stream (2).
As demonstrated in Figures 2 it is apparent through physical observation that having two heat exchangers units instead of one maximizes benefit of the counter flow effect.

This offers this design a higher heat/energy transfer coefficient in comparison of the single configuration.

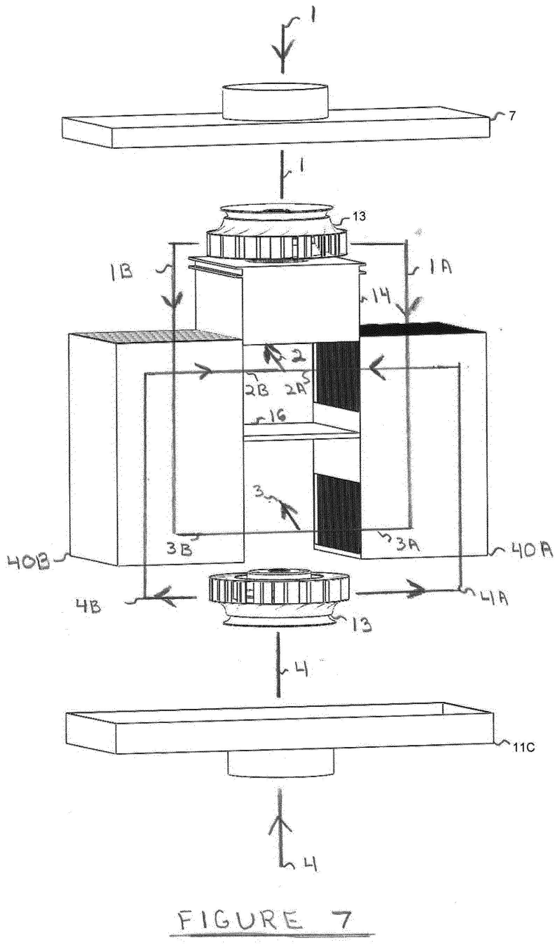

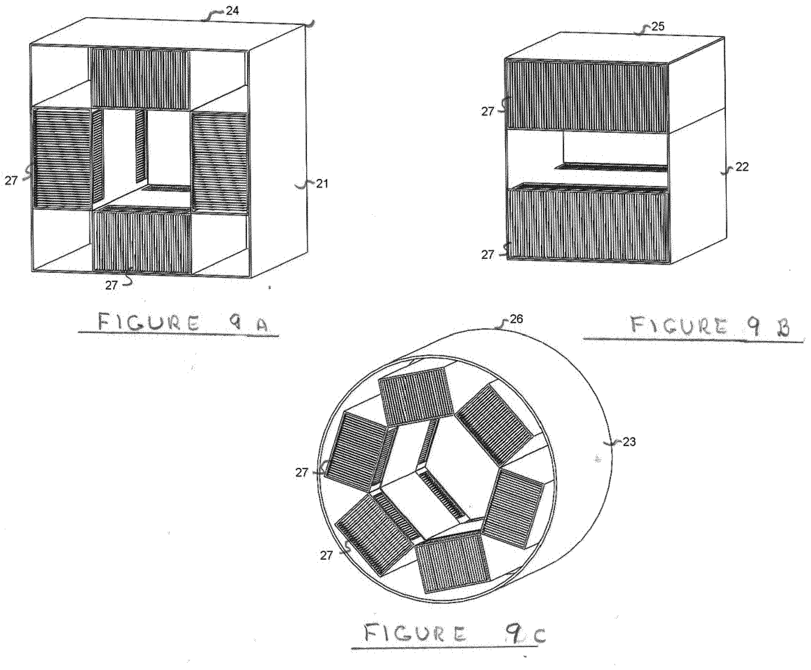

**Now referring to** **FIG.7,** FIG. 7 is an exploded perspective view of the energy recovery apparatus, using the same air path as that of Figure 3C. The quantity of heat exchanger (40) is showing only two in similarity to FIG. 9B.

Air stream (1) is in fluid communication via air stream (1A) (1B) to each top left and top right side and opening of the heat exchanger (40) Air stream 3 is in fluid communication via air stream (3A),(3B)... (3X) to each heat exchanger second opening at the center of the heat exchangers below the middle panel (16). Air stream (2) is in fluid communication via air stream (2A) (2B)... (2X), to each center opening above the middle panel (16) of the heat exchanger (40). Air stream 4 is in fluid communication via air stream (4A), (4B)... (4X) to each heat exchanger 40A, 40B ... 40X second opening at the bottom.

In the back of the unit, the top right outlet (2) and bottom outlet (3) are disposed in fluid communication in the center of the set of counter energy exchangers (40). The inner facing of the heat exchangers combined with the adaptor or fan back plate (14) combined with the middle panel (16) including not show the unit casing, are engaged in fluid sealing relation to provide the fluid communication from the air stream (2) to the inner, top opening of the set of heat exchangers (40).

The inner facing of the heat exchangers, combined with the adaptor or fan (13), the fan back panel (15) combined with the middle panel (16) including not show the unit casing, are engaged in fluid sealing relation to provide the fluid communication from the air stream (3).

The inner facing of the top cover (7) combined with the inlet ring adaptor and fan (13) and the fan back plate (14) are engaged in fluid sealing relation to provide the fluid communication from the top cover inlet and the fan (13) inlet. The combination of the top cover (7) and the fan back plate (14) combined with the unit exterior casing (not shown) also including both left and right opening of the heat exchangers are engaged in fluid sealing communication to define the blower housing. The top cover (7) the unit casing (not shown), combined with the two top area of the heat exchanger and the fan (13) bottom cover (14), are engaged in fluid sealing relation to provide the fluid communication from the fan (13) discharge to the heat exchangers (40) top opening.

The inner facing of the bottom cover (11C) combined with the inlet ring adaptor and fan (13) and the fan back plate cover (15) are engaged in fluid sealing relation to provide the fluid communication from the bottom cover inlet and the fan (13) inlet. The bottom cover (11C) ,the unit casing not shown, combined with the two bottom area of the heat exchanger and the fan (13) bottom cover (15) are engaged in fluid sealing relation to provide the fluid communication from the fan (13) discharge to the heat exchangers (40) bottom opening. The heat exchangers are of L type configuration, but may be of U- or Z-type in alternative examples.

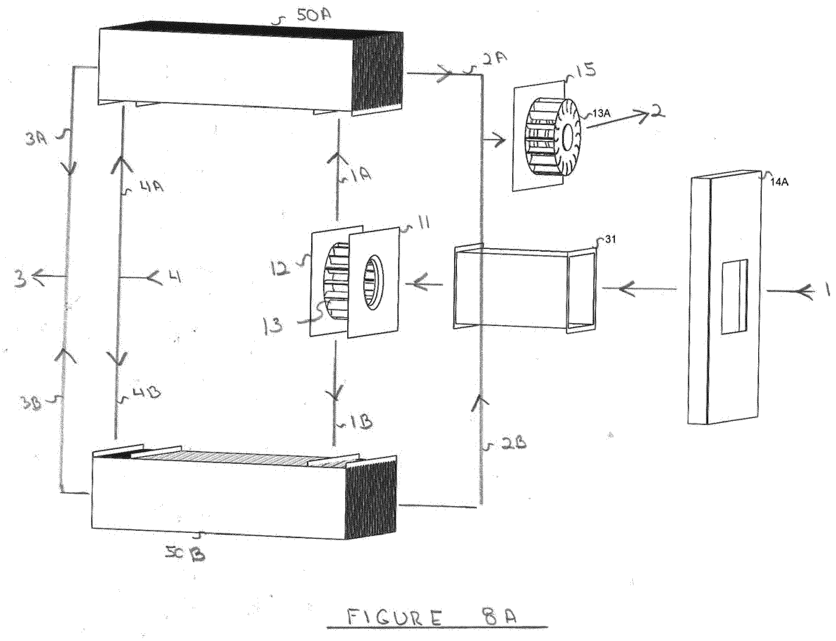

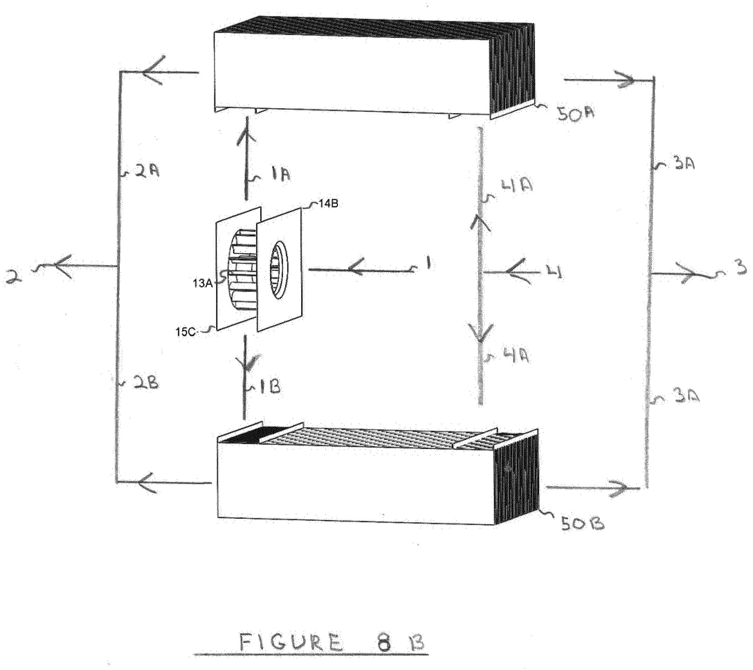

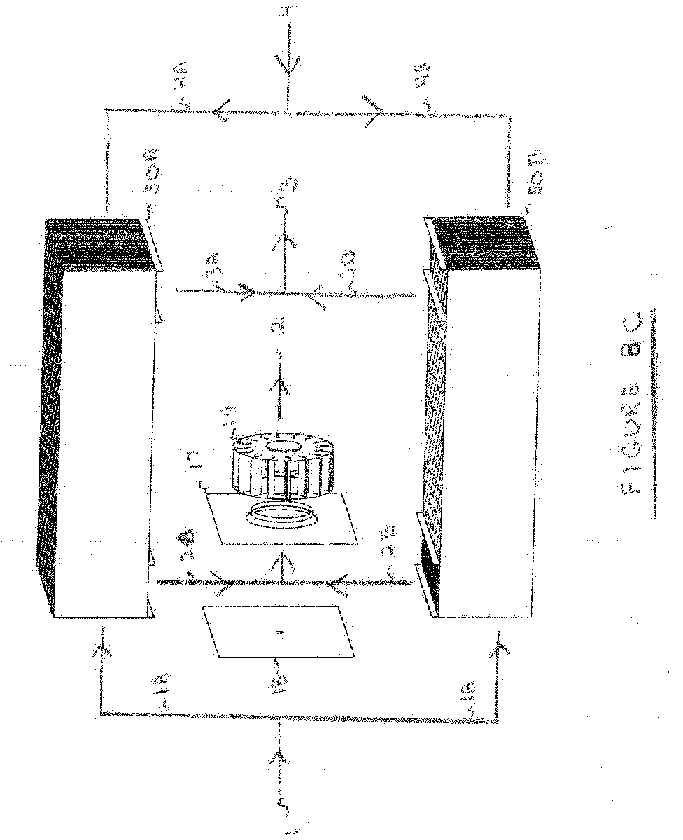

Although Figure 7 shows a specific single arrangement in controlling the air path, there are several other arrangements able to provide the same benefits. Fans can be moved in other parts of the apparatus and panels can provide for additional sealing. Air can be reversed and different type of heat exchangers can be utilized. Figure 8 shows one example of the several arrangements possible.

Air stream 1 is in fluid communication via air stream (1A) (1B) to the top right and left side and opening of the heat exchangers (40). The air stream (1A) (1B) entering in the air heat exchangers 40A, 40B changes into an air stream arrangement of several air streams to flow in a counter flow arrangement crossing and leaving the air stream (3A) (3B) in each heat exchangers, the passing air exchanges its energy through the heat exchanger plate's surfaces to its adjacent air stream. The adjacent air flow (4A) (4B) in each heat exchangers also crosses in a counter flow arrangement through the opposite direction, as an air stream arrangement of several air stream through the heat exchangers (40) passing through and leaving as air stream (2A) (2B) in each heat exchangers. These air streams (2A), (2B) are rejoined as a single delivery air stream (2).

This transfer of energy can be a cooling process in one set of the air streams and result in a heating process of the adjacent air streams or vice versa depending on the condition of the entering air. Where the plate type enables energy transfer then the exchange of energy transfer between the several air streams (1), which is adjacent to the several air streams (4) within the heat/energy exchangers can additionally be also a dehumidification process in one set of the air streams and result in a humidification process of the adjacent air streams or vice versa depending on the condition of the entering air.

As demonstrated in Figures 2 it is apparent through physical observation that having two heat exchangers units instead of one maximizes benefit of the counter flow effect.

This offers this design a higher heat/energy transfer coefficient in comparison of the single configuration.

**Now referring to** **Fig. 8****,** FIG. 8A,8B,8C are an exploded perspective views of three optional fan arrangement and air flow path which differ from examples in Figures 6, 7 with the outer cover removed from the energy exchanger. The fan arrangements can be combined in any arrangement either at the left or right, up or down of the unit and any air path can also be reversed. This could also be utilized with any type of heat exchanger such as U, Z, and L. The fan arrangement of FIG. 8A, 8B and 8C are shown without the cabinet that surrounds them. The cabinet (not shown) and the components within the cabinet, such as air exchangers 50A, 50B are in a sealing relationship so that air paths (for example, 1, 2, 3 or 4) are created within the unit that maintain air within that path and avoid leaking the air to adjacent paths.

**In** **Figure 8A** the air stream 1 represents the intake side of the first air system heat/energy exchanger, wherein the flow is divided into two or more streams (1A) (1B)... (1X), the number according to the number of parallel heat/energy exchangers (50A), (50B).... (50X). The inner facing of the fan inlet panel (11) combined with the inlet side of the intake duct (31) and not showing the unit cabinet is engaged in fluid sealing relation to provide the fluid communication from the inlet air stream (1) to the inlet side of the fan (13). The back fan panel (12) and the inlet fan panel (32) combined with the unit cover which is not shown are engaged in fluid sealing communication to provide the fluid communication from the fan (13) discharge as air stream (1A) (1B) to both center right opening of the heat exchangers (50A) (50B)... (50X).The combined parts back fan panel (12) and inlet fan panel (32) combined with the unit cover and both center right openings of the heat exchangers are engaged in fluid sealing communication to define the discharge side of the blower housing.

The air streams (1A) (1B) enter the air inlet of heat exchanger 50A 50B, and so on depending on the number of heat/energy exchangers. Air stream 3 represents the outlet side of the first air system of heat/energy exchanger 50 such that air stream (3A) egresses from 30A, air stream (3B) egresses from heat/energy exchanger 50B, and so on.

Air stream 4 represents the intake side of the second air system of the heat/energy exchanger, wherein the flow is divided into two or more streams (4A) (4B)... (4X) depending on the number of parallel heat/energy exchangers (50A), (50B).... (50X). Air stream 2 represents the outlet side of the second air (such as the exhaust air) system of heat/energy exchanger 50, such that air stream (2A) egresses from 50A, air stream (2B) egresses from heat/energy exchanger 50B, and so on. The suction volume space is defined by the combination of the inner facing of the fan inlet panel (32) the outlet side of the intake duct (31), the heat exchangers sides and the unit cabinet (not shown), as well as the second fan (13A), fan inlet panel (15) and the inside right side cover (14A). Together, these components are engaged in fluid sealing relation to provide the fluid communication from the outlet air streams (2A) (2B) to the delivery fan inlet on panel (15) . The fan inlet panel 15 combined with the inside right side cover 14A with the exterior of the intake 10 provides means for the blower to push the air outside the unit.

An air stream (1) is suctioned by the fan (13). The air is then discharged from the fan as positive pressure to air streams (1A) (1B) to each right center opening of the heat exchangers (50A) (50B). On a second air system the cabinet which is not showing, the exterior of the duct (31), the panel (32) and the two right side of the heat exchangers (50) are engaged in fluid sealing communication to provide the fluid communication from the heat exchanger discharge air (2A) (2B) as air delivery air stream (2).

The discharged air stream (2A) (2B) is not in any sort of fluid communication with the intake air stream (1), and is separated from the air stream (1).

**In** **Figure 8B** the air stream 1 represents the intake side of the first air system heat/energy exchanger, wherein the flow is divided into two or more streams (1A) (1B)... (1X), depending on the number of parallel heat/energy exchangers (50A), (50B).... (50X). The inner facing of the fan inlet panel (14B) combined with the unit cabinet is which is not shown engaged in fluid sealing relation to provide the fluid communication from the inlet air stream (1) to the inlet side of the fan (13A).

The inner facing of the exterior cabinet (not shown) combined with the inlet ring adaptor and panel (14B), the fan back plate (15C) are engaged in fluid sealing relation to provide the fan discharge air to be delivered in the heat exchangers center left opening.

The combined panel (14B) and plate (15C) combined with the unit cover and both center left opening of the heat exchangers provide are engaged in fluid sealing communication to provide the blower housing.

The air streams (1A) (1B) enter the air inlet of heat exchanger 50A, 50B, and so on depending on the number of heat/energy exchangers. Air stream 3 represents the outlet side of the first air system of heat/energy exchanger 50 such that air stream (3A) egresses from 30A, air stream (3B) egresses from heat/energy exchanger 50B, and so on.

Air stream 4 represents the intake side of the second air system of the heat/energy exchanger, wherein the flow is divided into two or more streams (4A) (4B)... (4X) depending on the number of parallel heat/energy exchangers (50A), (50B).... (50X). Air stream 2 represents the outlet side of the second air (such as the exhaust air) system of heat/energy exchanger 50, such that air stream (4A) egresses from 50A, air stream (4B) egresses from heat/energy exchanger 50B, and so on.

The unit cabinet (not shown) combined with the two left side s of the heat exchangers (50) engaged in a sealing relation to provide the fluid communication from the heat exchangers discharge left sides to the unit discharge air stream(2).

In operation, an air stream (1) is suctioned by the fan (13A). The air is then discharged from the fan as positive pressure to air streams (1A) (1B) to each left center opening of the heat exchangers (50). The fan back plate (15C) and the inlet fan panel (14B) combined with the unit cover which is not shown are engaged in fluid sealing communication to provide the fluid communication from the fan (13A) and discharge to both center right opening of the heat exchangers (50). The unit cabinet (not shown) combined with the two left sides of the heat exchangers (50) are engaged in a sealing relation to provide the fluid communication from the heat exchangers discharge left sides (2A) (2B) to the unit discharge air stream(2).

**In** **Figure 8C** an air stream 1 represents the intake side of the first air system heat/energy exchanger, wherein the flow is divided into two or more streams (1A) (1B)... (1X), depending on the number of parallel heat/energy exchangers (50A), (50B).... (50X).

The unit cabinet (not shown) combined with the two left sides of the heat exchangers (50) engaged in a sealing relation to provide the fluid communication from the heat exchangers intake left sides (1A) (1B) to the unit intake air stream (1). The air streams (1A) (1B) enters the air inlet of heat exchanger 50A 50B, and so on depending on the number of heat/energy exchangers. Air stream 3 represents the outlet side of the first air system of heat/energy exchanger 50 such that air stream (3A) egresses from 30A, air stream (3B) egresses from heat/energy exchanger 50B, and so on.

Air stream 4 represents the intake side of the second air system of the heat/energy exchanger, wherein the flow is divided into two or more streams (4A) (4B)... (4X) depending on the number of parallel heat/energy exchangers (50A), (50B).... (50X). Air stream 2 represents the outlet side of the second air system of heat/energy exchanger 50, such that air stream (4A) egresses from 50A, air stream (4B) egresses from heat/energy exchanger 50B, and so on.

The back fan panel (18) and the fan inlet panel (17) combined with the unit cover which is not shown are engaged in fluid sealing communication to provide the fluid communication from both center left opening (2A) (2B) of the heat exchangers (50) to the inlet of the fan (19).These components back fan panel (18) and fan inlet panel (17) combine with the unit cover, including center left opening of the heat exchangers, to define the volume space on the suction side of the fan (19). The fan inlet panel (17) combined with the unit cabinet (not shown) engages in a fluid sealing relationship to enable the discharge air (2)

In operation, an air stream (1), via air stream (1A) (1B) is either discharge into or suctioned into the two left side of the heat exchangers (50), depending on the air flow direction.

The fan (19) suctions the air from the two centers left side air stream (2A) (2B). The back fan panel (18) and the fan inlet panel (17) combined with the unit cover which is not shown are engaged in fluid sealing communication to provide the fluid communication from both center left opening (2A) (2B) of the heat exchangers (50) to the inlet of the fan (19).

The air is then discharges from the fan as positive pressure to air streams (2). The unit cabinet is which is not shown engaged in fluid sealing relation to provide the fluid communication from the fan (19) discharge side to the discharge air delivery stream (2).

**Now referring to** **FIG. 9A, 9B, 9C****,** are a series of partial perspective views of an alternate example of the counter flow energy exchanger arrangement are shown.

In Figure 9A, a unit (21) has a casing (24) as the perimeter of the unit (21) includes four heat exchangers (27) which may be any type of counter flow heat exchangers L, U or Z shape .This showing four side type apparatus enclosed with four heat exchangers.

In Figure 9B, unit (22) has a set of heat exchangers (27) in a rectangular casing (25) of the unit (22), being two heat exchangers (27) opposed in a rectangular enclosure. In Figure 9C, unit (23) has six heat exchangers (27) arranged in the circumference of its casing (26).

The operation of heat exchangers show in FIGS. 9A - 9C is essentially the same as the method previously described above. Other geometric interior and perimeter shapes having any number of sides may be employed that would have the same or similar effect.

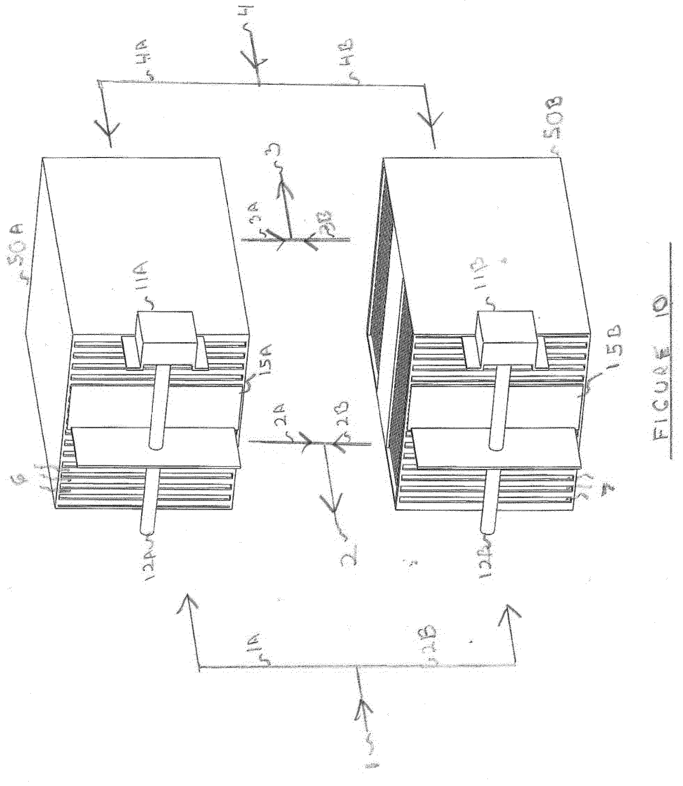

**Now referring to** **FIG.10**, FIG. 10 is a perspective view of a heat recovery unit having a defrost capability. The defrost capability described may be added to any of the former examples if and when defrosting is required. The heat exchanger is shown as being an L shape configuration but any suggested type also can be utilized.

Air stream 1 represents the intake side of the first air system (such as outside air) heat/energy exchanger, wherein the flow is divided into two or more streams (1B)... (1X) depending on the number of parallel heat/energy exchangers (50A), (50B).... (50X). Air stream 1A enters the air inlet of heat/energy exchanger 50A, air stream 1B enters the air inlet of heat/energy exchanger 50B, and so on depending on the number of heat/energy exchangers.. Air stream 3 which could represents the outlet side of the first air (such as the indoor delivery air) system of heat/energy exchanger 40, such that air stream (3A) egresses from 50A, air stream (3B) egresses from heat/energy exchanger 50B, and so on.

Air stream 2 represents the intake side of the second air system (such as inside air) heat exchanger, wherein the flow is divided into two or more streams (2A) (2B)... (2X) depending on the number of parallel heat exchangers (50A), (50B).... (50X). Air stream 4 represents the outlet side of the second air system (such as the exhaust air) of heat/energy exchanger 50, such that air stream (4A) egresses from 50A, air stream (4B) egresses from heat/energy exchanger 50B, and so on.

A set of dampers (15A) on one side is disposed in fluid communication with air stream (1A) and the damper (15B) and on the second side is disposed in fluid communication to air stream (1B). Fixed damper motors (11A) (11B) are attached to motor and damper screws (12A) (12B), respectively, to enable the dampers (15A) (15B) to move left or right against the facing of the heat exchanger's (50A) (50B) as the motor rotates either clockwise or counterclockwise to permit or block a section of the air flow.

In the event that the defrost is not required the dampers (15A) (15B) are moved out of the air stream (1A) (1B) and the system operates as usual, shown for example in FIG. 3.

In applying the defrost process, the entering air stream (1) entering the heat exchanger (50) in winter mode of operation can be below freezing, causing the adjacent air stream to potentially to condense and freeze against its heat exchangers heat transfers wall. This can provide a scenario where this frost build up can restrict the air and also lessen the heat transfer effectiveness since frost has insulating properties. Air stream (1) being in winter mode of operation is cold outdoor air and is in fluid communication via air stream (1A) (1B) to each side and opening of the heat exchangers. Within the heat exchanger the air streams (1A) (1B) changes the air stream arrangement into several air stream to flow in a counter flow arrangement crossing and leaving the as air stream (3A) (3B). In each heat exchanger, the passing air transfers its energy through the heat exchanger plate's surfaces to its adjacent air stream. The adjacent air flow (4A) (4B) in each heat exchangers also crosses in a counter flow arrangement through the opposite direction, as an air stream arrangement of several air stream through the heat exchangers (50) passing through and leaving as air stream (2A) (2B) in each heat exchangers . These air streams are rejoined as a single delivery air stream (2).

This heat transfer energy in winter mode is a cooling process in one set of the air streams and result in a heating process of the adjacent air streams or vice versa depending on the condition of the entering air then condensation could occur depending on temperatures and dew points of the air streams. The cooling effect in the adjacent air stream (4A) (4B) is then cooled by the adjacent air stream (1A) (1B) air stream and as a result the leaving air stream (2) is the cooled.

When operating below freezing conditions, the cold adjacent air stream (2A) (2B) can cause condensation and freeze against its heat exchanger heat transfers wall. This can provide a scenario where this frost build up can restrict the air and also lessen the heat transfer effectiveness since frost has similarities to an insulator.

Having a set of dampers (15A) (15B) moving against the heat exchangers (50) opening interrupt periodically certain air path such as shown as cooling coil (6) and causes part of the entering air (1A) (1B) not to flow across the heat exchanger s (50) therefore not cooling its adjacent air streams. The temperately interruption of cold air flow 1 enables the adjacent passing air from (4A) (4B) to defrost the ice buildup.

In one embodiment, the damper motor (11A, 11B) rotates and turns damper screw (12A, 12B). As the damper 15A, 15B is mounted on the damper screw (12A, 12B) in a screw relationship, as the screw turns the damper (15A, 15B) moves either closer to or further from the motor (11A, 11B), along the screw. The damper's (15A, 15B) movement, portion by portion, gradually covers each part of the heat exchangers surface temporarily to enable defrost through the whole heat exchangers.

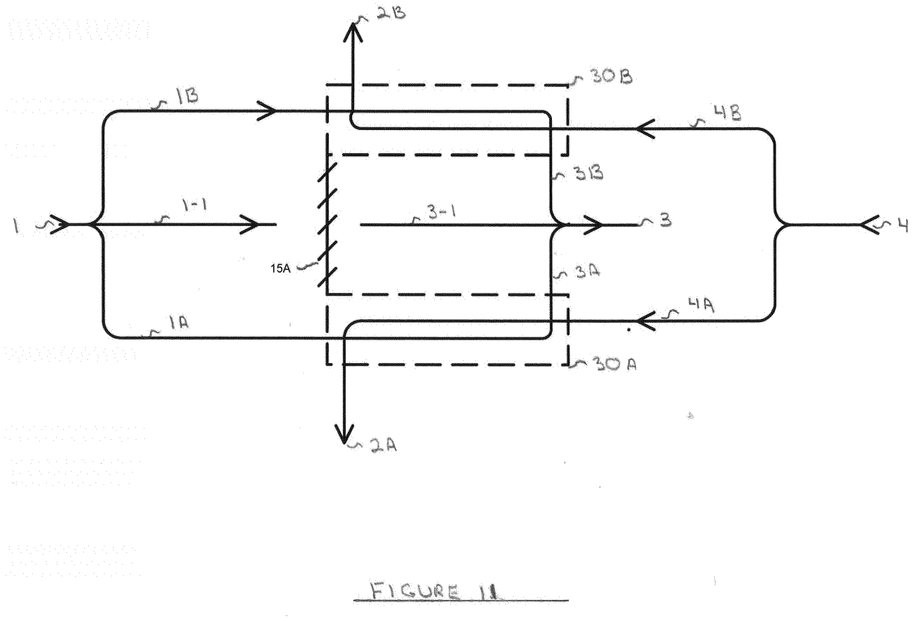

**Now Referring to** **Fig. 11,** Figure 11 is a line diagram showing an air path similar to that of FIG. 3B in an economizer application.

Air stream 1 represents the intake side of the first air system (such as outside air) heat/energy exchanger, wherein the flow is divided into three streams (1A) (1B) (1-1). Air stream 1A enters the air inlet of heat/energy exchanger 40A, air stream 1B enters the air inlet of heat exchanger 40B, and (1-1) is connected to the damper (15A, 15B) in the center air stream. Air stream 3 represents the outlet side of the first air system (such as the indoor delivery air) of heat/energy exchanger 30, such that air stream (3A) egresses from 30A, air stream (3B) egresses from heat/energy exchanger 30B, and air stream (3-1) which is also connected to the delivery side of the damper is in connection to (3).

Air stream 4 (such as inside air) represents the intake side of the second air system of the heat/energy exchanger, wherein the flow is divided into two or more streams (4A) (4B). Air stream 2 represents the outlet side of the second air (such as the exhaust air) system of heat/energy exchanger 30, such that air stream (4A) egresses from 30A, air stream (4B) egresses from heat/energy exchanger 30B.

In operation, the processed air (1) which is the outdoor air can either cross on the left hand side of the heat/energy exchangers (40) via (1A) (1B) or optionally flow across the damper (15A, 15B) via air stream (1-1), on the condition that the damper (15A, 15B) is opened. The outdoor air can flow across the damper as air stream (3-1) and connect as the indoor delivery air (3).

On the second opening of the air stream (1A) (1B) which is the heat exchanger entering air, the heat/energy exchanger leaving air (3A) (3B) also reconnect to the delivery air stream (3). The exhaust air (4) coming from a building then crosses the heat exchangers via air path (4A) (4B) and on the second opening the air is discharged as the heat exchanger exhaust air usually to the atmosphere as air stream (2A) and (2B).

On the scenario that the damper (15A, 15B) is closed the process remains the same as explained in Figure 3B.

Air stream (1) is in fluid communication via air stream (1B)... to each left side and opening of the heat/energy exchangers. The air stream (1A) (1B) entering in the air heat/energy exchangers changes into an arrangement of several air streams to flow in a counter flow arrangement crossing and leaving the as air stream (3A) (3B) in each heat/energy exchangers, the passing air transfers its energy through the heat/energy exchanger plate's surfaces to its adjacent air stream. The adjacent air flow (4A) (4B)... (4X) in each heat/energy exchangers also crosses in a counter flow arrangement through the opposite direction, as an air stream arrangement of several air stream through the heat exchangers (30) passing through and leaving as air stream (2A) (2B) in each heat/energy exchangers.

This transfer of energy can be a cooling process in one set of the air streams and result in a heating process of the adjacent air streams or vice versa depending on the condition of the entering air.

The outdoor bypass damper (15A) may be used by opening if the outdoor air (1) is able to provide adequate cooling or fresh air. The damper (15A) can open and direct air stream (1) to connect with the air delivery stream (3), passing the air through the bypass damper instead of through the heat exchanger. This naturally diminishes the effect of the heat exchanger as less air passes through it.

An exhaust and mixed air damper can also be used with this system. The exhaust and mixed air damper can control the air to be exhausted and it works in conjunction with the mixed air damper to control the return air to the premises. In the scenario that the building pressure exceeds a pre-determined limit, a pressure relief damper can be added either in the return air or in the building itself. A building air pressure damper and device can be installed if needed to discharge the indoor air on the condition that the damper (15) is opened and that there is too much pressure in the premises. This pressurize control type damper can be also installed in air stream (4) (4A) (4B).

## Claims

1. A heat exchanger system comprising:
a. two heat exchangers, a first heat exchanger (40A) and a second heat exchanger (40B), mounted within a single enclosure (24);
b. a first air inlet (211) for receiving air from a first air system;
c. a first air outlet (215) for expelling air from the first air system;
d. one or more second air inlets (211) for receiving air from a second air system;
e. one or more second air outlets (215) for expelling air from the second air system;
f. a first air path (1A) defined as a sealed air path from the first air inlet through the first heat exchanger (40A), to the first air outlet; and
g. a second air path (1B) defined as a sealed air path from the first air inlet through the second heat exchanger (40B) to the first air outlet,
h. a third air path (4A) defined as a sealed air path from the second air inlet through the first heat exchanger (40A), to the second air outlet; and
i. a fourth air path (4B) defined as a sealed air path from the second air inlet through the second heat exchanger (40B) to the second air outlet,
wherein the air from the first air inlet is split into the first and second air paths, wherein air from the second air inlet is split into the third and fourth air paths, and wherein the first heat exchanger is provided for transferring energy from the first air path to the third air path, and the second heat exchanger is provided for transferring energy from the second air path to the fourth air path;
**characterized in that**
the first air path and the third air path are provided in a counterflow relation, and
the second air path and the fourth air path are provided in a counterflow relation,
And **in that** the system further comprises an evaporator (6) for cooling air, wherein the first air outlet is in fluid communication with the evaporator, and the one or more second air inlets is in fluid communication with the evaporator, and the system is configured to make air from the first air outlet pass through the evaporator for cooling and enter the second air inlet.

2. The heat exchanger system of claim 1 wherein any of the first, second, third or fourth air paths follows a L-shape air path (43), a Z-shape air path (44), or a U-shape air path (42) through the heat exchangers

3. The heat exchanger system of claim 1 further comprising a bypass damper for controlling a quantity of air leaving the evaporator (6) bypassing a return stream (4) of the two heat exchangers to become part of a total delivery air.

4. The heat exchanger system of claim 1 further comprising one or more condensers to dissipate heat from the air expelled by at least one of the first air outlet or the one or more second air outlets.

5. The heat exchanger system of claim 4 further comprising a refrigerant valve to select the flow of refrigerant to a preferred condenser.

6. The heat exchanger system of claim 1 further comprising dampers mounted perpendicularly on a sectional entry of each heat exchangers complete with a damper motor and screw type rod, wherein the system is configured to make the rod turn for actuating the damper across the heat exchanger entry to selectively block the heat exchanger entry for defrosting the heat exchanger.

7. A method of changing a temperature of air, comprising the steps of:
a. receiving air through a first air inlet;
b. dividing the air into first and second air paths;
c. passing the air from the first air path through a first heat exchanger and to a first air outlet;
d. passing the air from the second air path through a second heat exchanger to the first air outlet;
e. receiving air through a second air inlet;
f. dividing the air into third and fourth air paths;
g. passing the air from the third air path through the first heat exchanger and to a second air outlet; and
h. passing the air from the fourth air path through the second heat exchanger to the second air outlet and the first and second heat exchangers are within a single enclosure,
**characterized in that**
the first and third air paths transfer thermal heat or total heat energy within the first heat exchanger in a counterflow relation, and the second and fourth air paths transfer total heat energy within the second heat exchanger in a counterflow relation, and the first air outlet is in fluid communication with an evaporator (6), and the second air inlet is in fluid communication with the evaporator, further comprising the steps of:
i. passing air from the first air outlet through the evaporator, wherein the air is additionally cooled and dehumidified, and
j. passing the cooled and dehumidified air into the second air inlet.

## Patentansprüche

1. Wärmetauschersystem umfassend:
a. zwei Wärmetauscher, einen ersten Wärmetauscher (40A) und einen zweiten Wärmetauscher (40B), die innerhalb eines einzigen Gehäuses (24) montiert sind;
b. einen ersten Lufteinlass (211) zum Empfangen von Luft von einem ersten Luftsystem;
c. einen ersten Luftauslass (215) zum Ausstoßen von Luft aus dem ersten Luftsystem;
d. einen oder mehrere zweite Lufteinlässe (211) zum Empfangen von Luft von einem zweiten Luftsystem;
e. einen oder mehr zweite Luftauslässe (215) zum Ausstoßen von Luft aus einem zweiten Luftsystem;
f. einen ersten Luftweg (1A), der als ein versiegelter Luftweg von dem ersten Lufteinlass durch den ersten Wärmetauscher (40A) zu dem ersten Luftauslass definiert ist; und
g. einen zweiten Luftweg (1B), der als ein versiegelter Luftweg von dem ersten Lufteinlass durch den zweiten Wärmetauscher (40B) zu dem ersten Luftauslass definiert ist;
h. einen dritten Luftweg (4A), der als ein versiegelter Luftweg von dem zweiten Lufteinlass durch den ersten Wärmetauscher (40A) zu dem zweiten Luftauslass definiert ist; und
i. einen vierten Luftweg (4B), der als ein versiegelter Luftweg von dem zweiten Lufteinlass durch den zweiten Wärmetauscher (40B) zu dem zweiten Luftauslass definiert ist,
worin die Luft von dem ersten Lufteinlass in den ersten und zweiten Luftweg aufgeteilt wird, worin die Luft von dem zweiten Lufteinlass in den dritten und vierten Luftweg aufgeteilt wird und worin der erste Wärmetauscher zum Übertragen von Energie von dem ersten Luftweg an den dritten Luftweg vorgesehen ist und der zweite Wärmetauscher zum Übertragen von Energie von dem zweiten Luftweg an den vierten Luftweg vorgesehen ist,
**dadurch gekennzeichnet, dass** der erste Luftweg und der dritte Luftweg in einer Gegenstrombeziehung vorgesehen sind und der zweite Luftweg und der vierte Luftweg in einer Gegenstrombeziehung vorgesehen sind und dass das System weiterhin umfasst
einen Verdampfer (6) zum Kühlen der Luft, worin der erste Luftauslass in Fluidverbindung mit dem Verdampfer steht und der eine oder die mehreren zweiten Luftauslässe in Fluidverbindung mit dem Verdampfer stehen und das System so konfiguriert ist, die Luft zur Kühlung von dem ersten Luftauslass durch den Verdampfer passieren und in den zweiten Lufteinlass einzutreten zu lassen.

2. Wärmetauschersystem nach Anspruch 1, worin einer von dem ersten, zweiten, dritten oder vierten Luftweg einem L-förmigen Luftweg (43), einem Z-förmigen Luftweg (44) oder einem U-förmigen Luftweg (42) durch die Wärmetauscher folgt.

3. Wärmetauschersystem nach Anspruch 1, weiter umfassend eine Bypassklappe zum Steuern einer Menge von Luft, die den Verdampfer (6) verlässt und einen Rückstrom (4) der beiden Wärmetauscher umgeht, um Teil einer Gesamtförderluft zu werden.

4. Wärmetauschersystem nach Anspruch 1, weiter umfassend einen oder mehrere Kühler zum Abführen von Wärme aus der ausgestoßenen Luft von mindestens einem des ersten Luftauslasses oder des einen oder mehreren zweiten Luftauslässe.

5. Wärmetauschersystem nach Anspruch 4, weiter umfassend ein Kältemittelventil, um den Strom von Kältemittel an einen bevorzugten Kühler auszuwählen.

6. Wärmetauschersystem nach Anspruch 1, weiter umfassend Klappen, die perpendikulär auf einem sektionalen Eingang jedes Wärmetauschers montiert sind, vollständig mit einem Klappenmotor und einer schneckenartigen Stange, worin das System so konfiguriert ist, dass eine Drehung der Stange zur Betätigung der Klappe über den Wärmetauschereingang veranlasst wird, um den Wärmetauschereingang selektiv zum Entfrosten des Wärmetauschers zu blockieren.

7. Verfahren zum Ändern einer Lufttemperatur, umfassend die folgenden Schritte:
a. Empfangen von Luft durch einen ersten Lufteinlass;
b. Aufteilen der Luft in einen ersten und zweiten Luftweg;
c. Passieren der Luft von dem ersten Luftweg durch einen ersten Wärmetauscher und an einen ersten Luftauslass;
d. Passieren der Luft von dem zweiten Luftweg durch einen zweiten Wärmetauscher an den ersten Luftauslass;
e. Empfangen von Luft durch einen zweiten Lufteinlass;
f. Aufteilen der Luft in einen dritten und vierten Luftweg;
g. Passieren der Luft von dem dritten Luftweg durch den ersten Wärmetauscher und an einen zweiten Luftauslass;
h. Passieren der Luft von dem vierten Luftweg durch den zweiten Wärmetauscher an den zweiten Luftauslass
und wobei der erste und zweite Wärmetauscher sich innerhalb eines einzigen Gehäuses befinden, **dadurch gekennzeichnet, dass** der erste und dritte Luftweg Heizwärme oder Gesamtwärmeenergie innerhalb des ersten Wärmetauschers in einer Gegenstrombeziehung übertragen und der zweite und vierte Luftweg Gesamtwärmeenergie innerhalb des zweiten Wärmetauschers in einer Gegenstrombeziehung übertragen und der erste Luftauslass in Fluidverbindung mit einem Verdampfer (6) steht und der zweite Luftauslass in Fluidverbindung mit dem Verdampfer steht, weiterhin umfassend die Schritte:
i. Passieren von Luft von dem ersten Luftauslass durch den Verdampfer, worin die Luft zusätzlich gekühlt und entfeuchtet wird; und
j. Passieren der gekühlten und entfeuchteten Luft in den zweiten Luftauslass.

## Revendications

1. Un système d'échangeur de chaleur comprenant:
a. deux échangeurs de chaleur, un premier échangeur de chaleur (40A) et un deuxième échangeur de chaleur (40B), montés dans une seule enceinte (24) ;
b. une première entrée d'air (211) destinée à recevoir de l'air d'un premier système d'air ;
c. une première sortie d'air (215) destinée à expulser l'air du premier système d'air ;
d. une ou plusieurs secondes entrées d'air (211) destinées à recevoir de l'air provenant d'un second système d'air ;
e. une ou plus secondes sorties d'air (215) destinées à expulser l'air provenant du second système d'air ;
f. un premier trajet d'air (1A) défini comme étant un trajet d'air scellé provenant de la première entrée d'air (40A) à travers le premier échangeur de chaleur (40A), vers la première sortie d'air ; et
g. un second trajet d'air (1B) défini comme étant un trajet d'air scellé provenant de la première entrée d'air à travers le second échangeur de chaleur (40B), vers la première sortie d'air,
h. un troisième trajet d'air (4A) défini comme étant un trajet d'air scellé provenant de la seconde entrée d'air à travers le premier échangeur de chaleur (40A), vers la seconde sortie d'air ; et
i. un quatrième trajet d'air (4B) défini comme étant un trajet d'air scellé provenant de la seconde entrée d'air à travers le second échangeur de chaleur (40B) vers la seconde sortie d'air,
dans lequel l'air provenant de la première entrée d'air est divisé en deux premier et second trajets d'air,
dans lequel l'air provenant de la seconde entrée d'air est divisé en deux troisième et quatrième trajets d'air, dans lequel le premier échangeur de chaleur est prévu pour transférer de l'énergie du premier trajet d'air au troisième trajet d'air,
et le second échangeur de chaleur est prévu pour transférer de l'énergie du second trajet d'air au quatrième trajet d'air ;
**caractérisé en ce que**
le premier trajet d'air et le troisième trajet d'air sont prévus dans une relation à contre-courant et le second trajet d'air
et le quatrième trajet d'air sont prévus dans une relation à contre-courant,
et **en ce que** le système comprend en outre
un évaporateur (6) destiné à refroidir l'air, dans lequel la première sortie d'air
est en communication fluidique avec l'évaporateur, et l'une ou les secondes entrées d'air sont en communication fluidique avec l'évaporateur, et le système est configuré pour que l'air provenant de la première sortie d'air passe à travers l'évaporateur pour être refroidi et entre dans la seconde entrée d'air.

2. Le système d'échangeur de chaleur de la revendication 1 dans lequel l'un quelconque parmi les premier, second, troisième ou quatrième trajets d'air suit un trajet d'air en forme de L (43), un trajet d'air en forme de Z (44), ou un trajet d'air en forme de U (42) à travers les échangeurs de chaleur

3. Le système d'échangeur de chaleur de la revendication 1 comprenant en outre un clapet de dérivation destiné à contrôler une quantité d'air quittant l'évaporateur (6) en contournant un courant de retour (4) des deux échangeurs de chaleur pour faire partie de la quantité totale d'air fournie.

4. Le système d'échangeur de chaleur de la revendication 1 comprenant en outre un ou plusieurs condensateurs visant à dissiper la chaleur de l'air expulsé par au moins l'une de la première sortie d'air ou l'une ou les secondes sorties d'air.

5. Le système d'échangeur de chaleur de la revendication 4 comprenant en outre une vanne de réfrigérant visant à sélectionner le flux de réfrigérant vers un condensateur préféré.

6. Le système d'échangeur de chaleur de la revendication 1 comprenant en outre des clapets montés perpendiculairement sur une entrée de section de chacun des échangeurs de chaleur équipés d'un moteur d'amortisseur et d'une tige de type à vis, dans lequel le système est configuré pour faire tourner la tige de façon à actionner le clapet à travers l'entrée de l'échangeur de chaleur afin de bloquer de façon sélective l'entrée de l'échangeur de chaleur pour dégivrer l'échangeur de chaleur.

7. Une méthode de changement de la température de l'air, comprenant les étapes suivantes :
a. réception de l'air à travers une première entrée d'air ;
b. division de l'air en premier et second trajets d'air ;
c. passage de l'air depuis le premier trajet d'air à travers un premier échangeur de chaleur et vers une première sortie d'air ;
d. passage de l'air provenant du second trajet d'air à travers un second échangeur de chaleur vers la première sortie d'air ;
e. réception de l'air à travers une seconde entrée d'air ;
f. division de l'air en troisième et quatrième trajets d'air ;
g. passage de l'air provenant du troisième trajet d'air à travers le premier échangeur de chaleur et vers une deuxième sortie d'air ; et
h. passage de l'air provenant du quatrième trajet d'air à travers le second échangeur de chaleur vers la seconde sortie d'air
et les premier et second échangeurs de chaleur sont dans une seule enceinte,
**caractérisée en ce que**
les premier et troisième trajets d'air transfèrent l'énergie de la chaleur thermique ou de la chaleur totale dans le premier échangeur thermique dans une relation à contre-courant, et les second et quatrième trajets d'air transfèrent l'énergie thermique totale dans le second échangeur de chaleur dans une relation à contre-courant,
et la première sortie d'air est en communication fluidique avec un évaporateur (6), et la seconde entrée d'air est en communication fluidique avec l'évaporateur,
comprenant en outre les étapes suivantes :
i. Passage de l'air provenant de la première sortie d'air à travers l'évaporateur, dans lequel l'air est également refroidi et déshumidifié et
j. passage de l'air refroidi et déshumidifié dans la seconde entrée d'air.
